# EUROPEAN PATENT SPECIFICATION

(11) **EP 4 649 416 B1**
(45) Date of publication and mention of the grant of the patent: **30.09.2026**
(21) Application number: 23700499.9
(22) Date of filing: 09.01.2023
(51) Int. Cl.: G06F 21/55, H04L 9/40

(54) **DEFENSE AGENT CONTROL IN A COMMUNICATION NETWORK**
VERTEIDIGUNGSAGENTENSTEUERUNG IN EINEM KOMMUNIKATIONSNETZWERK
COMMANDE D'AGENT DE DÉFENSE DANS UN RÉSEAU DE COMMUNICATION

(43) Date of publication of application: 19.11.2025
(73) Proprietor: Telefonaktiebolaget LM Ericsson (publ), 164 83 Stockholm (SE)
(72) Inventor: SEDJELMACI, Hichem, 91300 Massy (FR)
(74) Representative: Ericsson
(86) International application number: PCT/EP2023/050343
(87) International publication number: WO 2024/149443

(56) References cited:
- WO-A1-2022/260564
- US-A1- 2019 342 194
- US-B1- 11 227 047

## Description

### TECHNICAL FIELD

The present application relates generally to a communication network, and relates more particularly to defense agent control in such a network.

### BACKGROUND

Traditional approaches to securing a communication network protect the communication network against unauthorized access and then allow unfettered access to network resources after initial authorization, on the assumption that authorized network entities can be trusted. A zero-trust architecture (ZTA), by contrast, does not assume network entities can be trusted, even after initial authorization. A ZTA therefore individually authorizes each individual request for access to network resources, rather than naively allowing such requests on the basis that the request comes from a previously authorized network entity.

Some ZTA approaches distribute agents in the communication network to defend the communication network. See, e.g., the ZTA approach described in K. Ramezanpour, et al., "Intelligent Zero Trust Architecture for 5G/6G Tactical Networks: Principles, Challenges, and the Role of Machine Learning", arXiv, 2021. Such distributed defense agents may monitor for anomalies at different network entities and make decisions about whether a detected anomaly constitutes malicious activity. Challenges nonetheless still remain for how to practically realize a ZTA with distributed defense agents.

WO 2022/260564 A1 discloses a method for determining a Decision-Making Threshold, DMT, comprising obtaining environment threat data comprising one or more events, each event associated with a label providing an indication of a threat event. The method further comprises obtaining the target metric scores; computing anomaly predictions relating to if the events are malicious or not and comparing the anomaly predictions with a DMT to obtain malicious threat predictions.

### SUMMARY

Some embodiments herein distribute a set of defense agents in a communication network for anomaly detection and control the defense agents in a way that practically accounts for (e.g., balances) both anomaly detection accuracy and resource consumption. According to some embodiments in this regard, a security controller controls whether and/or how each defense agent in the set performs each of one or more anomaly detection tasks, based on metrics characterizing the defense agents' accuracy and resource consumption. For example, the security controller may control one or more of the least accurate defense agents to stop performing an anomaly detection task if the set of defense agents consumes excessive resources, e.g., so as to alleviate resource strain with as little reduction in accuracy as possible. As another example, the security controller may allow the defense agents to collaborate with one another to improve anomaly detection accuracy, but prohibit that collaboration if the defense agents consume excessive resources. In these and other examples, then, the security controller advantageously safeguards anomaly detection accuracy, e.g., as needed for realizing a zero-trust architecture (ZTA), while also accounting for the reality that network resource availability imposes practical constraints on distributed anomaly detection. Some embodiments herein thereby provide anomaly detection that is robust to changing circumstances that impact resource availability and achievable accuracy.

Other embodiments herein alternatively or additionally scrutinize the distributed defense agents themselves for maliciousness. The security controller in this regard may deem a defense agent malicious if the defense agent itself is anomalous in terms of its resource consumption and/or anomaly detection accuracy. The security controller in this case may control the malicious anomaly detector to no longer perform anomaly detection or otherwise isolate the malicious anomaly detector. In these and other embodiments, the security controller advantageously secures the communication network even against malicious defense agents, rather than naively assuming that defense agents are trusted, consistent with a ZTA.

More particularly, embodiments herein include a method performed by a security controller for a communication network in which defense agents in a set are distributed for anomaly detection in the communication network in accordance with particular embodiments. The method includes obtaining one or more accuracy metrics characterizing how accurately the defense agents in the set detect anomalies in the communication network. The method also includes obtaining one or more resource consumption metrics characterizing how extensively the defense agents in the set consume resources in the communication network. The method further comprises controlling the defense agents in the set based on the one or more accuracy metrics and the one or more resource consumption metrics.

In some embodiments, the one or more accuracy metrics include a set-wide false positive rate comprising a rate at which the defense agents in the set incorrectly detect anomalies, a set-wide false negative rate comprising a rate at which the defense agents in the set fail to detect anomalies, and/or a set-wide false rate comprising a combination of the set-wide false positive rate and the set-wide false negative rate. Alternatively or additionally, the one or more accuracy metrics include, for each of the defense agents in the set, an agent-specific false positive rate comprising a rate at which the defense agent incorrectly detects anomalies, an agent-specific false negative rate comprising a rate at which the defense agent fails to detect anomalies, and/or an agent-specific false rate comprising a combination of the agent-specific false positive rate and the agent-specific false negative rate.

In some embodiments, controlling the defense agents in the set comprises, based on the one or more accuracy metrics and the one or more resource consumption metrics, controlling whether and/or how each defense agent in the set performs each of one or more anomaly detection tasks.

In some embodiments, controlling the defense agents in the set comprises, for each of one or more anomaly detection tasks, controlling which one or more of the defense agents in **the set are** to perform the anomaly detection task and which one or more of the defense agents in the set, if any, are not to perform the anomaly detection task, based on the one or more accuracy metrics and the one or more resource consumption metrics.

In one embodiment, for example, controlling the defense agents comprises, for at least one of the one or more anomaly detection tasks, making a decision to switch the set from an accuracy-enhancing mode in which all of the defense agents in the set perform the anomaly detection task to a resource-saving mode in which at least one of the defense agents in the set does not perform the anomaly detection task, based on comparison of a set-wide resource consumption metric to a set-wide resource consumption threshold for the anomaly detection task. Controlling the defense agents the comprises, based on the decision, determining which one or more of the defense agents in the set are still to perform the anomaly detection task in the resource-saving mode and which one or more of the defense agents in the set are not to perform the anomaly detection task in the resource-saving mode, based on agent-specific accuracy metrics for the respective defense agents.

In other embodiments, controlling the defense agents comprises, for at least one of the one or more anomaly detection tasks, making a decision to switch the set from a resource-saving mode in which at least one of the defense agents in the set does not perform the anomaly detection task to an accuracy-enhancing mode in which all of the defense agents in the set perform the anomaly detection task, based on: (i) comparison of a set-wide accuracy metric to a set-wide accuracy threshold for the anomaly detection task; or (ii) comparison of a set-wide resource consumption metric to a set-wide resource consumption threshold for the anomaly detection task.

In some embodiments, controlling the defense agents comprises obtaining a defense agent utility metric for the set of defense agents as a function of the one or more accuracy metrics and the one or more resource consumption metrics, obtaining an attack utility metric as a function of the defense agent utility metric and an attack resource consumption metric reflecting an extent of resources required for attackers to execute a cooperative attack on the communication network, and controlling whether the defense agents in the set are to perform one or more anomaly detection tasks, based on comparison of the defense agent utility metric to the attack utility metric.

In one such embodiment, the defense agent utility metric is determined as *U_{D} = α*₁*. M_{D} + α*₂*. D_{D} - α*₃*.* (*P_{D} + N_{D}*) *- α*₃. *C_{D},* where *M_{D}* is a rate at which the defense agents in the set determine respective features of anomalies, *D_{D}* is a rate at which the defense agents in the set detect anomalies, *P_{D}* is a set-wide false positive rate comprising a rate at which the defense agents in the set incorrectly detect anomalies, *N_{D}* is a set-wide false negative rate comprising a rate at which the defense agents in the set fail to detect anomalies, *C_{D}* is a set-wide resource consumption metric, *M_{D}, D_{D}, P_{D}, N_{D}* and *C_{D}* ∈ [0,1], and *α*₁, *α*₂, *α*₃ ∈ [0, 1] are weight parameters. **In this case,** the attack utility metric is determined as *U_{A} =* -(*U_{D} + β. C_{A}*), where *C_{A}* is the attack resource consumption metric, *β* is a weight parameter, and *β* ∈ [0, 1].

In this case, controlling the defense agents comprises, for a feature monitoring task involving determining respective features of anomalies to be detected: (i) if *α*₃. *C_{D} > α*₁. *M_{D},* switching the set from an accuracy-enhancing mode in which all of the defense agents in the set perform the feature monitoring task to a resource-saving mode in which at least one of the defense agents in the set does not perform the feature monitoring task; or (ii) if *α*₃. (*P_{D} + N_{D}*) *> α*₁*. M_{D},* switching the set from a resource-saving mode in which at least one of the defense agents in the set does not perform the feature monitoring task to an accuracy-enhancing mode in which all of the defense agents in the set perform the feature monitoring task. Controlling also comprises, for a feature detection task involving detecting the determined features, (i) if *α*₃. *C_{D} > α*₂. *D_{D},* switching the set from an accuracy-enhancing mode in which all of the defense agents in the set perform the feature detection task to a resource-saving mode in which at least one of the defense agents in the set does not perform the feature detection task; or (ii) if *α*₃. (*P_{D} + N_{D}*) *> α*₂. *D_{D},* switching the set from a resource-saving mode in which at least one of the defense agents in the set does not perform the feature detection task to an accuracy-enhancing mode in which all of the defense agents in the set perform the feature detection task. Controlling further comprises, for a decision-making task involving making decisions on whether or not anomalies are present based upon detected features: (i) if *α*₃. (*P_{D} + N_{D}*) ≤ *α*₁*. M_{D} + α*₂*. D_{D},* switching the set from an accuracy-enhancing mode in which all of the defense agents in the set perform the decision-making task to a resource-saving mode in which at least one of the defense agents in the set does not perform the decision-making task; or (ii) if *α*₃. (*P_{D} + N_{D}*) *> α*₁*. M_{D} + α*₂*. D_{D},* switching the set from a resource-saving mode in which at least one of the defense agents in the set does not perform the decision-making task to an accuracy-enhancing mode in which all of the defense agents in the set perform the decision-making task.

In some embodiments, the one or more anomaly detection tasks include a feature monitoring task involving determining respective features of anomalies to be detected, a feature detection task involving detecting the determined features, and/or a decision-making task involving making decisions on whether or not anomalies are present based upon detected features.

In some embodiments, controlling the defense agents in the set alternatively or additionally comprises, based on the one or more accuracy metrics and the one or more resource consumption metrics, controlling whether or which defense agents in the set operate in a collaborative mode for performing anomaly detection collaboratively with one another and controlling whether or which defense agents in the set operate in a standalone mode for performing anomaly detection without collaborating with one another.

In one such embodiment, the one or more accuracy metrics are obtained for each of the collaborative mode and the standalone mode. In this case, said controlling comprises controlling **defense agents** in the set to operate in the collaborative mode if each of one or more collaborative mode triggering criteria is met, wherein the one or more collaborative mode triggering criteria include a set-wide accuracy metric for the standalone mode exceeding an accuracy threshold for the standalone mode, and wherein the set-wide accuracy metric is a set-wide false rate metric. Controlling may then comprise controlling defense agents in the set to operate in the standalone mode if each of one or more standalone mode triggering criteria is met, wherein the one or more standalone mode triggering criteria include a set-wide accuracy metric for the collaborative mode falling below an accuracy threshold for the collaborative mode, wherein the set-wide accuracy metric is a set-wide false rate metric. In one embodiment, for example, the accuracy threshold for the standalone mode is a function of a set-wide anomaly detection rate of the defense agents in the set while operating in the standalone mode, and/or the accuracy threshold for the collaborative mode is a function of a set-wide anomaly detection rate of the defense agents in the set while operating in the collaborative mode. Alternatively or additionally, the one or more resource consumption metrics are obtained for each of the collaborative mode and the standalone mode, in which case the one or more standalone mode triggering criteria further include a set-wide resource consumption metric obtained for the collaborative mode exceeding a resource consumption threshold for the collaborative mode.

In some embodiments, the set-wide false rate metric for the standalone mode is equal to *γ*₂. (*P_{L} + N_{L}*), where *γ*₂ is a weight parameter, *P_{L}* is a set-wide false positive rate for the standalone mode, and *N_{L}* is a set-wide false negative rate for the standalone mode. And the false rate threshold for the standalone mode is equal to *γ*₁*. D_{L},* where *γ*₁ is a weight parameter, and *D_{L}* is a set-wide anomaly detection rate while operating in the standalone mode. And the set-wide false rate metric for the collaborative mode is equal to *δ*₂. (*P_{I} + N_{I}*)*,* where *δ*₂ is a weight parameter, *P_{I}* is a set-wide false positive rate for the collaborative mode, and *N_{I}* is a set-wide false negative rate for the collaborative mode. And the false rate threshold for the collaborative mode is equal to *δ*₁. *D_{I},* where *δ*₁ is a weight parameter, and *D_{I}* is a set-wide anomaly detection rate while operating in the collaborative mode.

In some embodiments, the multiple defense agents include multiple first layer defense agents distributed in the communication network and a second layer defense agent, each of the first layer defense agents is configured to determine respective features of anomalies in the communication network, detect the determined features of the anomalies, and make decisions on whether or not anomalies are present based upon features detected, and the second layer defense agent is configured to collaborate with the multiple first layer defense agents to assist the first layer defense agents to collaboratively decide whether or not anomalies are present in the communication network.

In some embodiments, said controlling comprises, based on the one or more accuracy metrics and the one or more resource consumption metrics, identifying a defense agent in the set as being malicious, and controlling the identified defense agent to stop performing anomaly detection.

Embodiments herein also include corresponding apparatus, computer programs, and carriers of those computer programs.

### BRIEF DESCRIPTION OF THE DRAWINGS

Figure 1 is a block diagram of a communication network 10 according to some embodiments.
Figure 2A is a block diagram of a security controller that exploits set-wide accuracy and/or resource consumption metrics according to some embodiments.
Figure 2B is a block diagram of a security controller that exploits agent-specific accuracy and/or resource consumption metrics according to some embodiments.
Figure 3 is a block diagram of a security controller for identifying and controlling malicious defense agents according to some embodiments.
Figure 4 is a block diagram of an accuracy-enhancing mode for a set of defense agents according to some embodiments.
Figure 5 is a block diagram of a resource-saving mode for a set of defense agents according to some embodiments.
Figure 6A is a block diagram of a security controller for controlling defense agents in a set to operate in a resource-saving mode according to some embodiments.
Figure 6B is a block diagram of a security controller for controlling defense agents in a set to operate in an accuracy-enhancing mode according to some embodiments.
Figure 7 is a block diagram of a set of defense agents that are each configured to perform different anomaly detection tasks according to some embodiments.
Figure 8A is a block diagram of an accuracy-enhancing mode for a set of defense agents according to other embodiments.
Figure 8B is a block diagram of a resource-saving mode for a set of defense agents according to other embodiments.
Figure 9A is a block diagram of a security controller for controlling defense agents in a set to operate in a resource-saving mode according to other embodiments.
Figure 9B is a block diagram of a security controller for controlling defense agents in a set to operate in an accuracy-enhancing mode according to other embodiments.
Figure 10A is a block diagram of a standalone mode for a set of defense agents according to other embodiments.
Figure 10B is a block diagram of a collaborative mode for a set of defense agents according to other embodiments.
Figure 11 is a block diagram of a security controller for controlling defense agents in a set to operate in a collaborative mode or a standalone mode according to other embodiments.
**Figure 12** is a logic flow diagram of a method performed by a security controller for controlling defense agents in a set to operate in a collaborative mode or a standalone mode according to other embodiments.
Figure 13 is a block diagram of defense agents distributed hierarchically in a communication network according to some embodiments.
Figure 14 is a logic flow diagram of a method performed by a security controller according to some embodiments.
Figure 15 is a block diagram of a security controller according to some embodiments.
Figure 16 shows an example of a communication system in accordance with some embodiments.
Figure 17 is a block diagram of a host which may be an embodiment of the host of Figure 16, in accordance with various aspects described herein.

### DETAILED DESCRIPTION

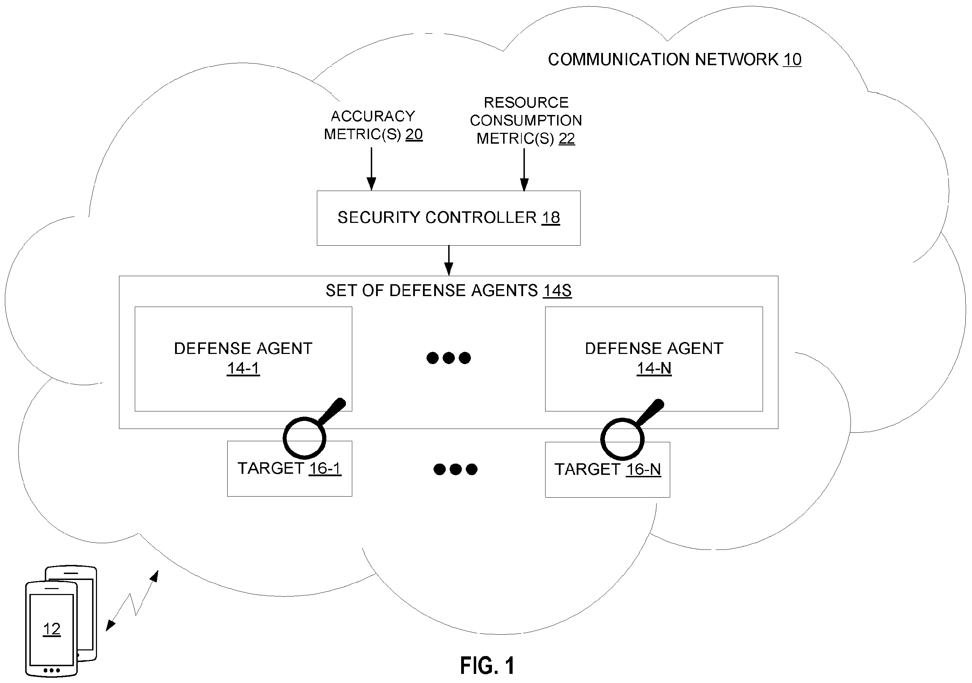

Figure 1 shows a communication network 10 (e.g., a 5G+ network) according to some embodiments. The communication network 10 provides communication service to one or more communication devices 12, e.g., user equipment (UE). The communication network 10 may for example provide wireless communication service to the one or more communication devices 12.

The communication network 10 includes multiple defense agents 14-1...14-N, generally referred to as defense agents 14. Each defense agent 14-n (1 ≤ n ≤ N) is an agent configured to defend the communication network 10, e.g., from an attack or other anomaly. The defense agents may for example be configured to detect anomalies in the communication network 10, so that appropriate action can be taken to safeguard the communication network 10 from such anomalies. An anomaly as used herein refers to a deviation from what is standard, normal, or expected in the communication network 10. An anomaly, for example, may be an attack on the communication network 10 (e.g., a denial of service attack), or may be the direct or indirect impact of such an attack (e.g., a higher rate of access request rejection due to overloading, a lower number of connected devices, lower system throughput, etc.). The defense agents 14 in such an example may be configured to detect an attack itself, or may be configured to detect the direct or indirect impact of such an attack. Generally, though, the defense agents 14 detect an anomaly in the sense that they detect some sort of deviation from what is standard, normal, or expected, e.g., where a decision on the existence of a deviation may be made based on a machine learning model reflecting what is standard, normal, or expected..

The defense agents 14 may or may not themselves understand the full implication of a detected anomaly. In one embodiment, for example, defense agents 14 that detect an anomaly in the form of a higher-than-normal rate of access request rejection may or may not be configured to attribute that anomaly to an attack, much less a certain kind of attack such as a denial-of-service attack. In another embodiment, by contrast, defense agents may detect an anomaly in the form of a certain kind of attack.

No matter the particular form of anomalies that the defense agents 14 are configured to detect, the defense agents 14 detect anomalies at respective targets 16-1...16-N in the communication network 10, generally referred to as targets 16. A target 16 as used herein refers to any network node or function that an anomaly detector scrutinizes for evidence of the existence of an anomaly. In one embodiment, a defense agent 14-n may be co-located with the target 16-n at which the defense agent 14-n detects anomalies. In this and other embodiments, the distribution of defense agents 14 may reflect the distribution of the targets 16 at which the defense agents 14 detect anomalies.

The defense agents 14 and/or the targets 16 may be distributed in one or more dimensions, which may for example include geography and/or functionality. In some embodiments, for instance, at least some of the defense agents 14 and/or the targets 16 are geographically distributed in the communication network 10, e.g., at different parts of the communication network's coverage area. Alternatively or additionally, at least some of the defense agents 14 and/or the targets 16 may be functionally distributed in the communication network 10, e.g., for detecting anomalies at different types of network functions or network equipment.

In some embodiments in this regard, the defense agents 14 are distributed in the communication network 10 as part of a zero-trust architecture (ZTA). See, e.g., the ZTA approach described in K. Ramezanpour, et al., "Intelligent Zero Trust Architecture for 5G/6G Tactical Networks: Principles, Challenges, and the Role of Machine Learning", arXiv, 2021. The defense agents 14 in these and other embodiments may monitor for and detect anomalies in the communication network 10 on the basis that the targets 16 cannot be trusted, even after initial authorization.

The defense agents 14 in Figure 1 are shown as each being a member of a set 14S of defense agents. The set 14S may be defined as including defense agents 14 that are configured to perform anomaly detection at certain targets 16, and/or that are distributed for performing anomaly detection over a certain geographic or functional area, e.g., referred to as a 'neighborhood'. In fact, in some embodiments, the communication network 10 includes multiple such sets 14S of defense agents 14 that perform anomaly detection for different respective areas or neighborhoods; however, for illustration purposes, Figure 1 focuses on a single set 14S of defense agents 14.

In this context, Figure 1 shows that a security controller 18 controls the set 14S of defense agents 14. The security controller 18 may be common to the defense agents 14 but be centralized and/or separate from any of the defense agents 14 in the set 14S. Alternatively, the security controller 18 may be distributed among multiple distributed agents 14 and/or be co-located with one or more of the distributed agents 14 in the set. Regardless, the security controller 18 effectively controls the defense agents 14 in the set 14S in one or more aspects of their operation. The security controller 18 may for example control whether and/or how each of the defense agents 14 in the set 14S performs anomaly detection or one or more tasks thereof.

Notably, the security controller 18 according to some embodiments herein exploits metrics that characterize anomaly detection accuracy and anomaly detection resource consumption in order to control the defense agents 14. For example, the security controller 18 according to some embodiments exploits such metrics to realize a desirable balance between anomaly detection accuracy and anomaly detection resource consumption, e.g., as needed for realizing a zero-trust architecture (ZTA) in practice. Alternatively or additionally, the security controller 18 according to other embodiments exploits such metrics to secure the communication network 10 even against defense agents 14 that become malicious, rather than naively assuming that defense agents 14 are always trusted, e.g., consistent with a ZTA.

To this point, Figure 1 more particularly shows that the security controller 18 obtains one or more accuracy metrics 20 and one or more resource consumption metrics 22. The security controller 18 may obtain these metrics 20, 22 by receiving one or more of them from another node in the communication network 10 (not shown) and/or by calculating, deriving, or otherwise determining one or more of them itself.

The one or more accuracy metrics 20 characterize how accurately the defense agents 14 in the set 14S detect anomalies in the communication network 10. The one or more accuracy metrics 20 may characterize such accuracy positively in terms of how often the defense agents 14 perform anomaly detection accurately, e.g., how often the defense agents 14 correctly detect the presence of anomalies and correctly detect the absence of anomalies. Or, the one or more accuracy metrics 20 may characterize such accuracy negatively in terms of how often the defense agents 14 perform anomaly detection inaccuracy, e.g., how often the defense agents 14 incorrectly detect the presence of anomalies and incorrectly detect the absence of anomalies. As an example of the latter, the one or more accuracy metrics 20 may include a false positive rate (a rate at which the defense agents 14 incorrectly detect anomalies), a false negative rate (a rate at which the defense agents 14 fail to detect anomalies), and/or a false rate (a combination of the false positive rate and the false negative rate, such as a weighted sum of the false positive rate and the false negative rate).

The one or more resource consumption metrics 22 characterize how extensively the defense agents 14 in the set 14S consume resources in the communication network 10, e.g., the extent of resource consumption attributable to anomaly detection. Consumable resources in this respect may for example include energy resources, processing or computation resources, communication resources, and/or any other depletable asset that is consumed by the performance of anomaly detection. A resource consumption metric 22 characterizing how extensively the defense agents 14 consume energy resources in performing anomaly detection may for example have a value that indicates, or is proportional to, a number of kilowatt/hours (kWhs) consumed by the defense agents 14. As another example, a resource consumption metric 22 characterizing how extensively the defense agents 14 consume communication resources in performing anomaly detection may for example have a value that indicates, or is proportional to, a bitrate consumed by the defense agents 14.

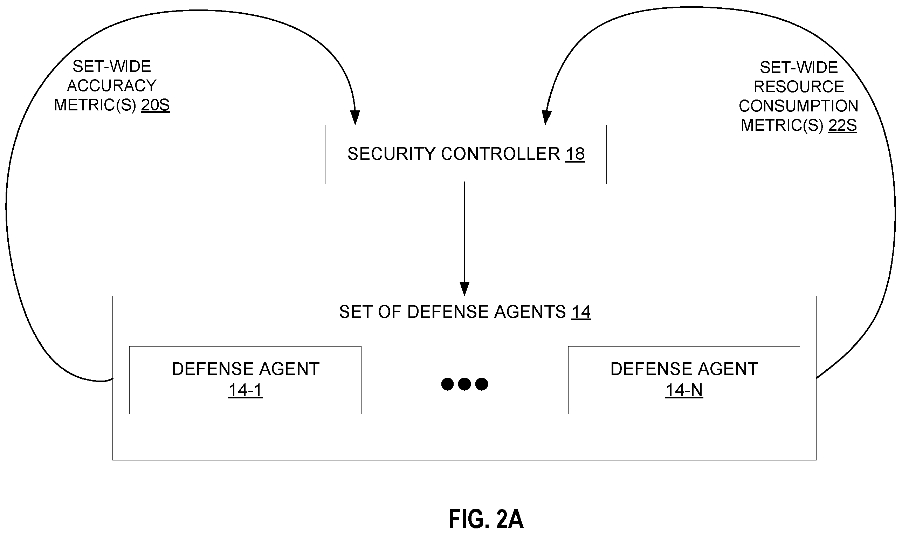

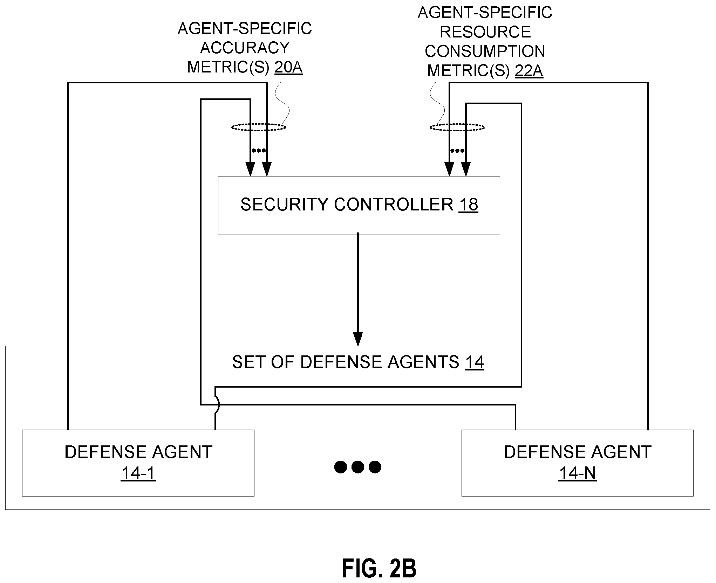

Note that the accuracy metric(s) 20 and/or the resource consumption metric(s) 22 may include set-wide metric(s) that characterize the defense agents 14 in the set 14S as a whole and/or agent-specific metric(s) that characterize the defense agents 14 on an individual, agent-by-agent basis. For example, as shown in Figure 2A, set-wide accuracy metric(s) 20S characterize the anomaly detection accuracy of the defense agents 14 in the set 14S as a whole (e.g., the false positive rate of the defense agents 14 in combination), and set-wide resource consumption metric(s) 22S characterize the resource consumption of the defense agents 14 in the set 14S as a whole (e.g., the total combined number of kWhs consumed by the set 14S). By contrast, as shown in Figure 2B, agent-specific accuracy metric(s) 20A characterize the anomaly detection accuracy of the defense agents 14 on an individual, agent-by-agent basis (e.g., one false positive rate for each of the defense agents 14 individually), and agent-specific resource consumption metric(s) 22A characterize the resource consumption of the defense agents 14 on an individual, agent-by-agent basis (e.g., each agent's individual kWhs). Note that, for illustrative purposes, the arrows in Figures 2A-2B show the metrics 20, 22 as 'originating' from the set 14S or from individual defense agents 14 so as to characterize the set 14S or the individual agents 14, but the metrics 20, 22 may in fact not actually be 'received' from the set 14S or from the individual defense agents 14; rather, the metrics 20, 22 may be calculated or otherwise determined (by the security controller 18 or another node) based on other information (e.g., anomaly reports) received from the set 14S or the individual defense agents 14.

In any event, the security controller 18 controls the defense agents 14 in the set 14S based on the accuracy metric(s) 20 and resource consumption metric(s) 22. For example, based on the accuracy metric(s) 20 and resource consumption metric(s) 22, the security controller 18 may control whether and/or how each defense agent 14 performs anomaly detection, or control whether and/or how each defense agent 14 performs each of one or more anomaly detection tasks. The security controller 18 may do so as part of securing the communication network 10 against any defense agent 14 that the metrics 20, 22 suggests is malicious and/or as part of a strategy to balance anomaly detection accuracy with resource consumption.

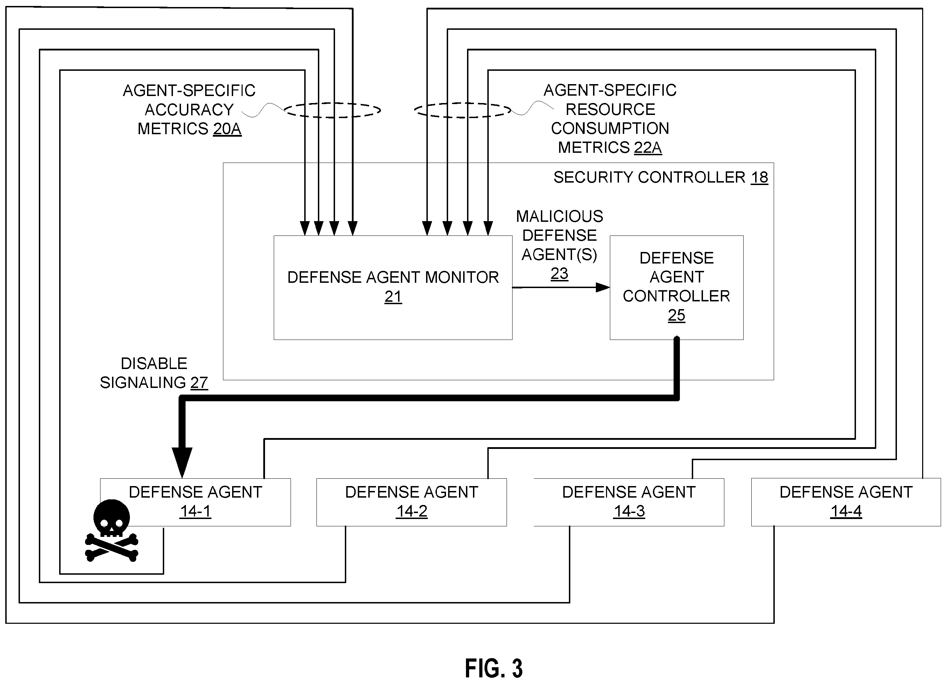

Figure 3 shows some embodiments where the security controller 18 controls the defense agents 14 in order to safeguard against malicious defense agents 14. In the example, defense agent 14-1 is malicious. Defense agent 14-1 in this regard may have been taken over or otherwise compromised by a malicious actor, so that defense agent 14-1 no longer operates as originally intended for protecting the communication network 10. Alternatively, a malicious actor may have injected defense agent 14-1 into the communication network 10 so that the defense agent 14-1 masquerades as an operator-controlled defense agent. In either case, **defense agent** 14-1 may be malicious in the sense that it intends to disrupt the normal operation or privacy of the communication network 10, such as with a cyber attack.

The security controller 18 in Figure 3 exploits agent-specific accuracy metrics 20A and/or agent-specific resource consumption metrics 22A in order to identify defense agent 14-1 as being malicious. The security controller 18 as shown in this regard includes a defense agent monitor 21 that obtains agent-specific accuracy metrics 20A and/or agent-specific resource consumption metrics 22A that are specific to respective ones of the defense agents 14. The defense agent monitor analyzes these metrics 20A, 22A determine if any of the metrics 20A, 22A are anomalous. Based on this analysis, the defense agent monitor 21 identifies any defense agent(s) 14 that are malicious. The defense agent monitor 21 may for example identify defense agent 14-1 as being malicious on the basis that the accuracy metric 20A and/or the resource consumption metric 22A specific to defense agent 14-1 are anomalous, either in and of themselves or as compared to the accuracy metric 20A and/or the resource consumption metric 22A specific to each of the other defense agents 14-2, 14-3, and 14-4. The anomalous character may for instance be defined in terms of the accuracy metric 20A and/or the resource consumption metric 22A specific to defense agent 14-1 deviating from the accuracy metric 20A and/or the resource consumption metric 22A for each of the other defense agents 14 by at least a threshold amount. In other embodiments, the anomalous character may be defined in terms of the accuracy metric 20A and/or the resource consumption metric 22A specific to defense agent 14-1 deviating outside bounds defined as normal. In one such embodiment, where the agent-specific accuracy metric(s) 20A specific to any given defense agent 14 include a false positive rate *P_{D}* and a false negative rate *N_{D},* the defense agent monitor 21 may identify that given defense agent 14 as malicious if *α₃.* (*P_{D} + N_{D}*) » *α*₂*. D_{D},* where *D_{D}* is a rate at which the given defense agent 14 detects anomalies, and where *α*₂, *α*₃ ∈ [0, 1] are weight parameters. In this case, the defense agent monitor 21 deems the given defense agent 14 as malicious on the basis that the weighted sum of its false positive rate *P_{D}* and false negative rate *P_{N}* is excessively disproportionate to the rate at which the defense agent 14 detects anomalies. In these and other cases, then, the defense agent monitor 21 generally exploits the agent-specific metrics 20A, 22A as evidence of maliciousness, e.g., on the assumption that malicious actions target or result in decreased anomaly detection accuracy and/or increased resource consumption.

Having identified malicious defense agent(s) 23, the defense agent monitor 21 indicates the malicious defense agent(s) 23 to a defense agent controller 25. The defense agent controller 25 takes appropriate action against the malicious defense agent(s) 23. As shown with respect to malicious defense agent 14-1, for example, the defense agent controller 25 transmits disable signaling 27 to defense agent 14-1. The disable signaling 27 may command disablement or removal of the malicious defense agent 14-1, request that the malicious defense agent 14-1 play only the role of an ordinary node rather than a defense agent, revoke authorization of the malicious defense agent 14-1 to use underlying resources that it relies upon, or otherwise controls the malicious defense agent 14-1 to stop performing anomaly detection. The security controller 18 may alternatively or additionally take steps to otherwise remove or isolate the malicious defense agent 14-1, e.g., by ignoring any anomaly detection (or lack thereof) from the malicious defense agent 14-1, by launching an update of cryptographic keys, etc.

Generally, then, the security controller 18 in some embodiments scrutinizes the distributed defense agents 14 themselves for maliciousness, on the basis of the accuracy and/or resource consumption metrics 20, 22. In these and other embodiments, the security controller 18 advantageously secures the communication network 10 even against malicious defense agents, rather than naively assuming that defense agents 14 are trusted, e.g., for operation of the communication network 10 according to a ZTA.

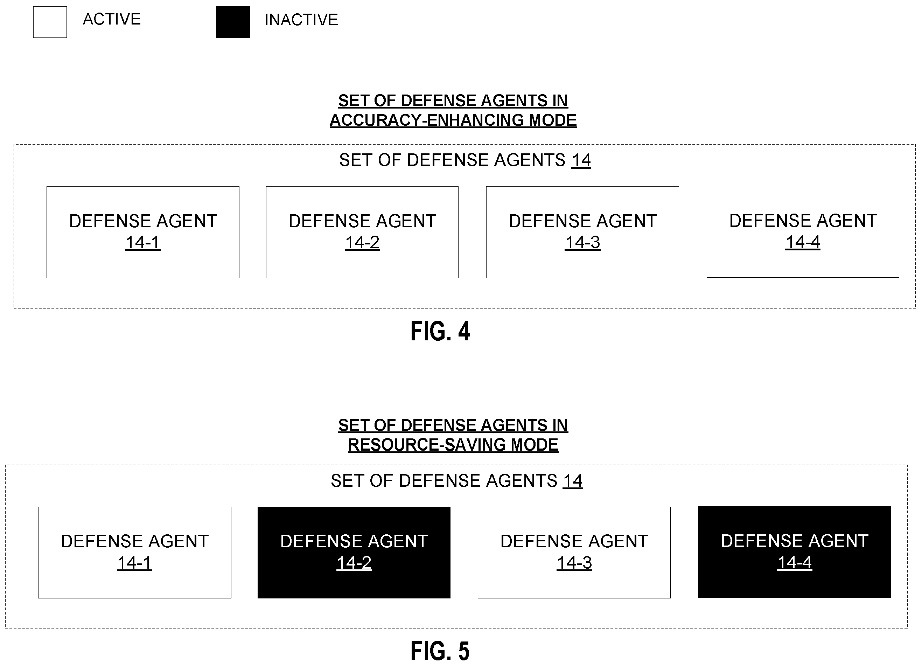

Consider now other embodiments for control of the defense agents 14 on the basis of the accuracy and resource consumption metrics 20, 22. In some embodiments, the security controller 18 controls whether each defense agent 14 in the set 14S performs anomaly detection, i.e., the security controller 18 controls defense agents 14 as a whole, e.g., they either perform all aspects of anomaly detection or they do not perform any aspect of anomaly detection. Figure 4 in this regard shows that, in some embodiments, the set 14S of defense agents 14 is capable of operating in a so-called accuracy-enhancing mode in which all defense agents 14 perform anomaly detection, i.e., all defense agents 14 are 'active' in the sense that they perform anomaly detection. Figure 5 by contrast shows that the set 14S of defense agents 14 is also capable of operating in a so-called resource-saving mode in which at least one of the defense agents 14 does not perform anomaly detection, i.e., at least one of the defense agents 14 is 'inactive' in the sense that it does not perform anomaly detection. In this case, then, the security controller 18 may decide, based on the accuracy and resource consumption metrics 20, 22, in which mode the set 14S of defense agents 14 is to operate (either the accuracy-enhancing mode or the resource-saving mode).

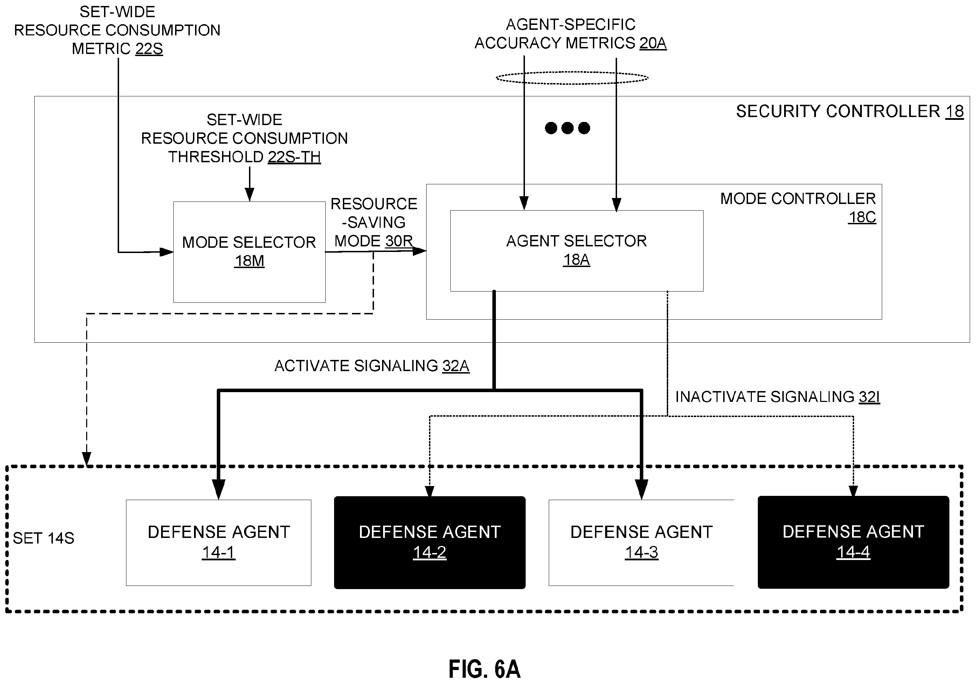

Consider an example shown in Figure 6A where the set 14S of defense agents 14 is operating in the accuracy-enhancing mode. The security controller 18 in this case includes a mode selector 18M that obtains a set-wide resource consumption metric 22S characterizing the extent to which the set 14S of defense agents 14 consumes resources. The mode selector 18M compares this set-wide resource consumption metric 22S to a set-wide resource consumption threshold 22S-TH. If the set-wide resource consumption metric 22S exceeds the set-wide resource consumption threshold 22S-TH, the mode selector 18M makes the decision to switch the set 14S of defense agents 14 to operate in the resource-saving mode 30R. Correspondingly, a mode controller 18C includes an agent selector 18A that selects one or more defense agents 14 that are to continue performing anomaly detection and selects one or more defense agents 14 that are to stop performing anomaly detection, i.e., to inactivate. The agent selector 18A as shown makes this selection based on agent-specific accuracy metrics 20A for the respective defense agents 14. In one embodiment, for example, the defense agent(s) 14 that the agent selector 18A selects to continue performing anomaly detection are the defense agents 14 (e.g., defense agents 14-1 and 14-3) that have the highest accuracy or that have accuracies above a threshold, as reflected by their agent-specific accuracy metrics 20A. And the defense agent(s) 14 that the agent selector 18A selects to stop performing anomaly detection are the defense agents 14 (e.g., defense agents 14-2 and 14-4) that have the lowest accuracy or that have accuracies below a threshold, as reflected by their agent-specific accuracy metrics 20A. To realize such selection, the agent selector 18A as shown transmits activate signaling 32A to defense agents 14-1, 14-3 that are to perform anomaly detection and transmits inactivate signaling 321 to defense agents 14-2, 14-4 that are not to perform anomaly detection.

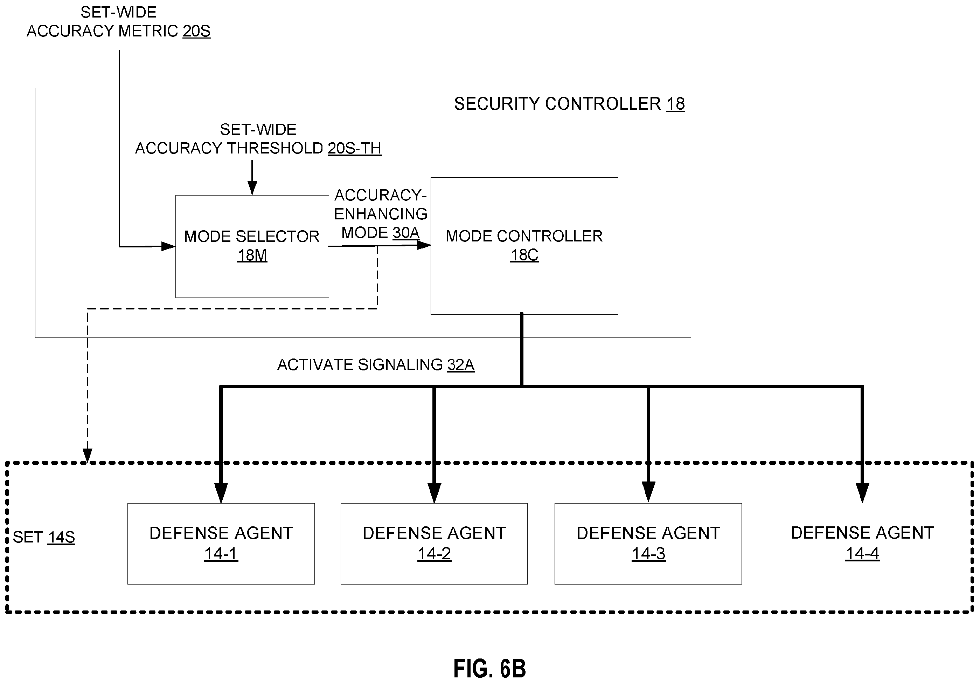

Figure 6B shows another example where the set 14S of defense agents 14 is operating in the resource-saving mode. The mode selector 18M in this case obtains a set-wide accuracy metric 22A characterizing the how accurately the set 14S of defense agents 14 detects anomalies. The mode selector 18M compares this set-wide accuracy metric 22A to a set-wide accuracy threshold 22A-TH. Based on this comparison, e.g., revealing unacceptably low accuracy, the mode selector 18M makes the decision to switch the set 14S of defense agents 14 to operate in the accuracy-enhancing mode 30A. Correspondingly, the mode controller 18C controls the set 14S of defense agents 14 to operate in the accuracy-enhancing mode 30A, e.g., by transmitting activate signaling 32A to all of the defense agents 14 in the set 14S.

Effectively, then, the security controller 18 in this example controls the set 14S of defense agents 14S to balance anomaly detection accuracy with resource consumption. And such control is performed on an agent-by-agent basis. By contrast, in other embodiments where anomaly detection involves multiple tasks, control may be performed on a task-by-task basis.

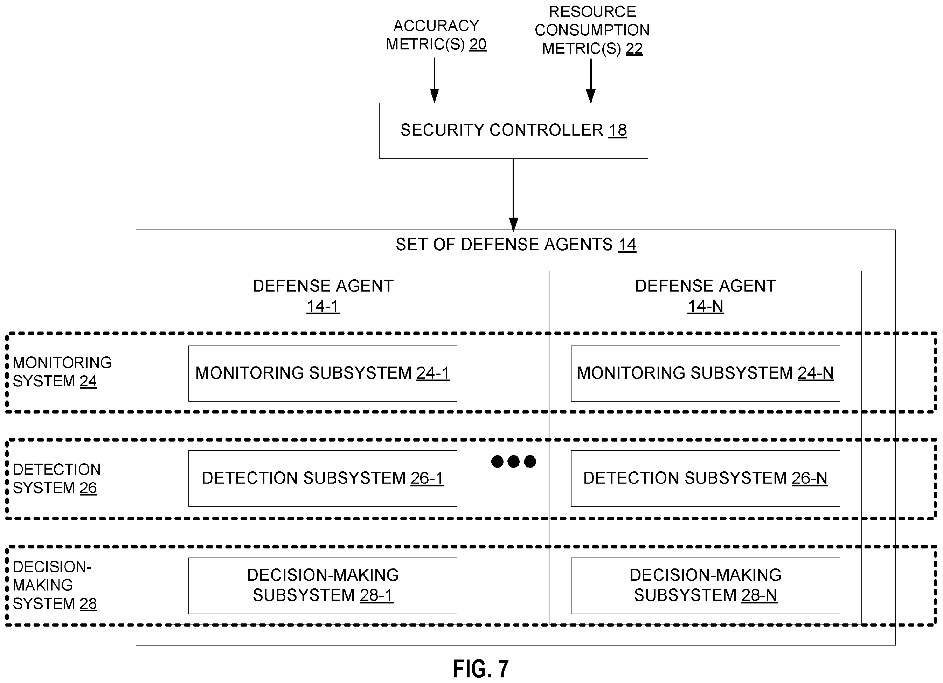

For example, in some embodiments, each defense agent 14 in the set 14S performs one or more tasks as part of anomaly detection, where such task(s) are appropriately referred to as anomaly detection task(s). In this case, the security controller 18 may control whether and/or how each defense agent 14 performs each anomaly detection task. Figure 7 shows one example where the anomaly detection task(s) include anomaly feature monitoring, feature detection, and decision-making.

In particular, Figure 7 shows that each of the defense agents 14-1...14-N includes a respective monitoring subsystems 24-1...24-N for performing a feature monitoring task as part of anomaly detection. The feature monitoring task involves determining respective features of anomalies to be detected. The features may for instance be machine learning (ML) features. For example, features characteristic of an anomaly in the form of a denial-of-service attack may include excessive access requests and corresponding rejections despite a low load on the communication network 10 attributable to admitted users. The feature monitoring task in this case would be to identify these features as being characteristics of a denial-of-service attack, as differentiated from other types of anomalies and/or as differentiated from the lack of an anomaly. Regardless, the combination of the monitoring subsystems 24-1...24-N across the defense agents 14-1...14-N in the set 14S form an overall monitoring system 24, i.e., the monitoring system 24 spans the defense agents 14 in the set 14S.

Similarly, Figure 7 shows that each of the defense agents 14-1...14-N includes a respective detection subsystems 26-1...26-N for performing a feature detection task as part of anomaly detection. The feature detection task involves detecting features determined by the monitoring system 24, i.e., detecting when such features are present versus when those features are absent. The combination of the detection subsystems 26-1...26-N across the defense agents 14-1...14-N in the set 14S form an overall detection system 26, i.e., the detection system 26 spans the defense agents 14 in the set 14S.

Finally, Figure 7 shows that each of the defense agents 14-1...14-N also includes a respective decision-making subsystems 28-1...28-N for performing a decision-making task as part of anomaly detection. The decision-making task involves making decisions on whether or not anomalies are present based upon features detected by the detection system 26. The combination of the decision-making subsystems 28-1...28-N across the defense agents 14-1...14-N in the set 14S form an overall decision-making system 28, i.e., the decision-making system 28 spans the defense agents 14 in the set 14S.

In this context, the security controller 18 may decide, based on the accuracy metric(s) 20 and the resource consumption metric(s) 22, which one or more of the defense agents 14 in the set 14S are to perform each anomaly detection task and which one or more of the defense agents 14 in the set 14S, if any, are not to perform each anomaly detection task. And then control the defense agent(s) 14 accordingly.

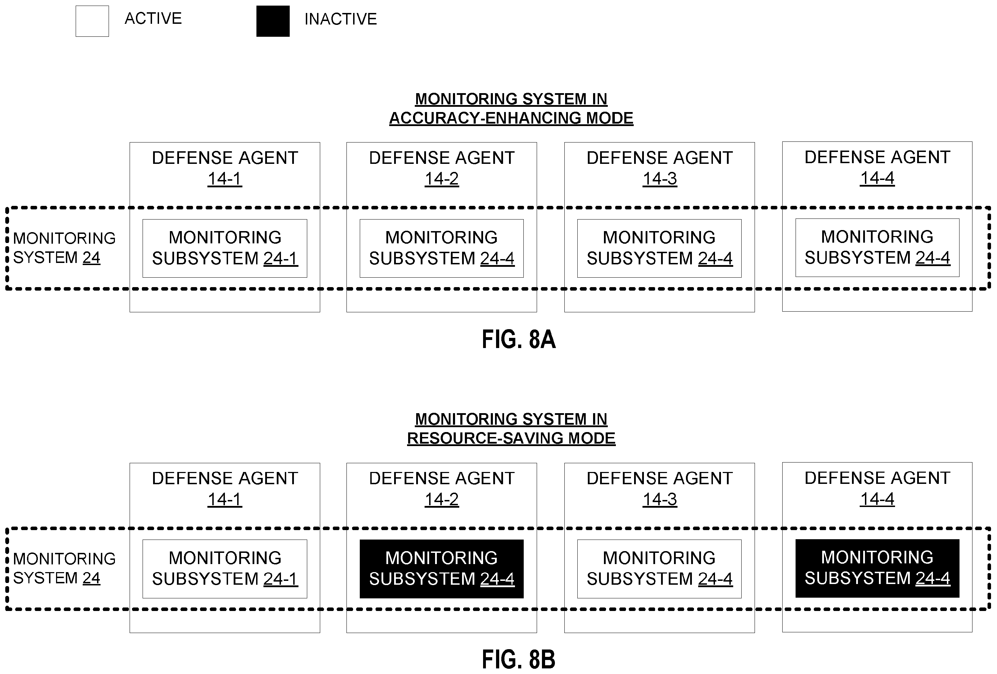

Figures 8A-8B show an example focused on the monitoring system 24 (with other examples not shown being equally applicable to the detection system 26 and the decision-making system 28). Figure 8A shows that, in some embodiments, the monitoring system 24 is capable of operating in a so-called accuracy-enhancing mode in which all monitoring subsystems 24-1...24-N of the defense agents 14 in the set perform the feature monitoring task, i.e., all monitoring subsystems 24-1...24-N of the defense agents 14 are 'active' in the sense that they perform the feature monitoring task. Figure 8B by contrast shows that the monitoring system 24 is also capable of operating in a so-called resource-saving mode in which at least one of the monitoring subsystems 24-1...24-N across the defense agents 14 does not perform the feature monitoring task, i.e., at least one of the monitoring subsystems 24-1...24-N across the defense agents 14 is 'inactive' in the sense that it does not perform the feature monitoring task. In this case, then, the security controller 18 may decide, based on the accuracy and resource consumption metrics 20, 22, in which mode the monitoring system 24 is to operate (either the accuracy-enhancing mode or the resource-saving mode).

Although framed above as the monitoring system 24 operating in the accuracy-enhancing mode or the resource-saving mode, the same idea may be alternatively framed in terms of the set 14S of defense agents 14 operating in the accuracy-enhancing mode or the resource-saving mode with respect to the feature monitoring task. For each of the different anomaly detection tasks, then, the set 14S of defense agents 14 may operate in the accuracy-enhancing mode or the resource-saving mode with respect to that task.

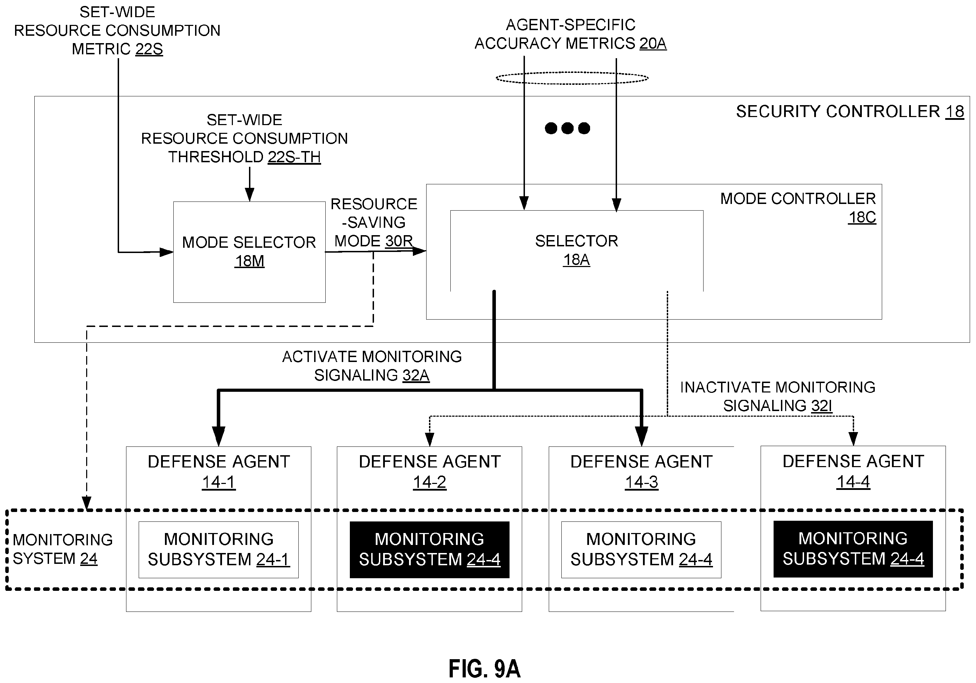

In any event, consider an example shown in Figure 9A where the monitoring system 24 is operating in the accuracy-enhancing mode, i.e., the set 14S of defense agents is operating in the accuracy-enhancing mode with respect to the feature monitoring task. The security controller 18 in this case includes a mode selector 18M that obtains a set-wide resource consumption metric 22S characterizing the extent to which the set 14S of defense agents 14 consumes resources. The mode selector 18M compares this set-wide resource consumption metric 22S to a set-wide resource consumption threshold 22S-TH. If the set-wide resource consumption metric 22S exceeds the set-wide resource consumption threshold 22S-TH, the mode selector 18M makes the decision to switch the set 14S of defense agents to operate in the resource-saving mode 30R with respect to the feature monitoring task. Correspondingly, a mode controller 18C includes a selector 18A that selects one or more defense agents 14 (or one or more corresponding monitoring subsystems 24) that are to continue performing the feature monitoring task and selects one or more defense agents 14 (or one or more corresponding monitoring subsystems 24) that are to stop performing the feature monitoring task, i.e., to inactivate with respect to the feature monitoring task. The selector 18A as shown makes this selection based on agent-specific accuracy metrics 20A for the respective defense agents 14. In one embodiment, for example, the defense agent(s) 14 that the selector 18A selects to continue performing the feature monitoring task are the defense agents 14 (e.g., defense agents 14-1 and 14-3) that have the highest accuracy or that have accuracies above a threshold, as reflected by their agent-specific accuracy metrics 20A. And the defense agent(s) 14 that the agent selector 18A selects to stop performing the feature monitoring task are the defense agents 14 (e.g., defense agents 14-2 and 14-4) that have the lowest accuracy or that have accuracies below a threshold, as reflected by their agent-specific accuracy metrics 20A. To realize such selection, the agent selector 18A as shown transmits activate signaling 32A to defense agents 14-1, 14-3 (or corresponding monitoring subsystems 24-1, 24-3) that are to perform the feature monitoring task and transmits inactivate signaling 32I to defense agents 14-2, 14-4 (or corresponding monitoring subsystems 24-2, 24-4) that are not to perform the feature monitoring task.

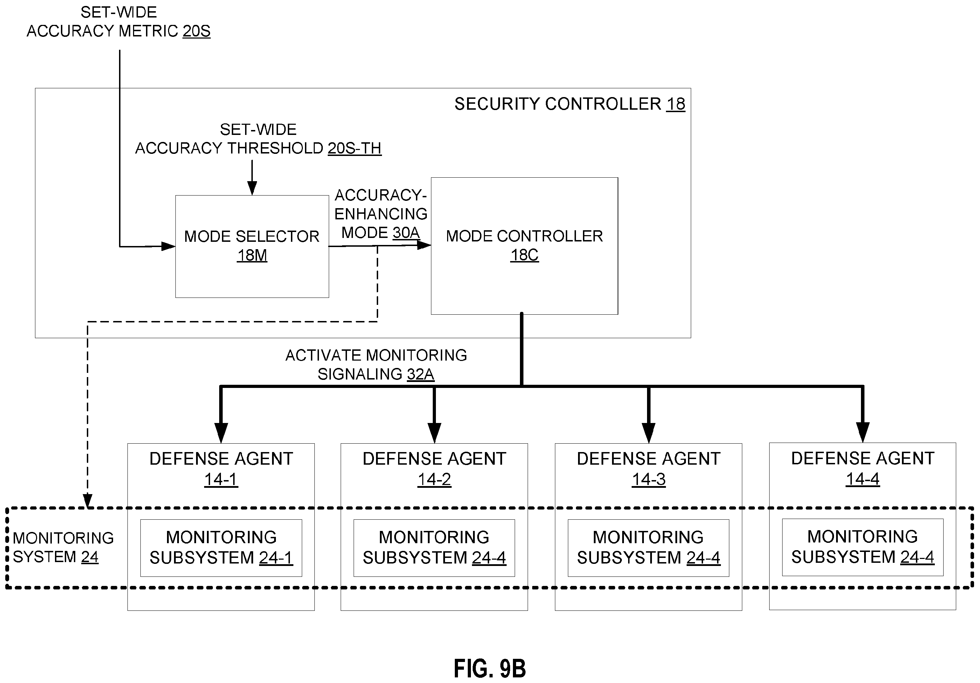

Figure 9B shows another example where the set 14S of defense agents 14 is operating in the resource-saving mode with respect to the feature monitoring task. The mode selector 18M in this case obtains a set-wide accuracy metric 22A characterizing the how accurately the set 14S of defense agents 14 detects anomalies. The mode selector 18M compares this set-wide accuracy metric 22A to a set-wide accuracy threshold 22A-TH. Based on this comparison, **e.g., revealing** unacceptably low accuracy, the mode selector 18M makes the decision to switch the set 14S of defense agents 14 to operate in the accuracy-enhancing mode 30A with respect to the feature monitoring task. Correspondingly, the mode controller 18C controls the set 14S of defense agents 14 to operate in the accuracy-enhancing mode 30A with respect to the feature monitoring task, e.g., by transmitting activate signaling 32A to all of the defense agents 14 in the set 14S or to all of the corresponding monitoring subsystems 24-1...24-N.

To further cement the example in Figures 9A-9B, in one embodiment, the security controller 18 decides to switch the set 14S of defense agents from the accuracy-enhancing mode to the resource-saving mode for the feature monitoring task if *α*₃. *C_{D} > α*₁*. M_{D},* where *α*₃. *C_{D}* is the set-wide resource consumption metric 22S in Figure 9A (with *α*₃ being a weight parameter ∈ [0, 1]), where *α*₁*. M_{D}* is the set-wide resource consumption threshold 22S-TH in Figure 9A (with *α*₁ also being a weight parameter ∈ [0, 1] and with *M_{D}* being a rate at which the defense agents 14 in the set 14S (the monitoring system 24) determine respective features of anomalies. By contrast, the security controller 18 decides to switch the set 14S of defense agents 14 from the resource-saving mode to the accuracy-enhancing mode for the feature monitoring task if *α*₃. (*P_{D} + N_{D}*) *> α*₁*. M_{D},* where *P_{D}* is the set-wide false positive rate for the set 14S of defense agents 14 and *N_{D}* is the set-wide false negative rate for the set 14S of defense agents.

Extended to the detection system 26, in some embodiments, the security controller 18 decides to switch the set 14S of defense agents from the accuracy-enhancing mode to the resource-saving mode for the feature detection task if *α*₃. *C_{D} > α*₂*. D_{D},* where *α*₃. *C_{D}* is a set-wide resource consumption metric 22S and where *α*₂. *D_{D}* is a set-wide resource consumption threshold 22S-TH (with *α*₂ also being a weight parameter ∈ [0, 1] and with *D_{D}* being a rate at which the defense agents 14 in the set 14S (the detection system 26) detect features determined by the monitoring system 24. By contrast, the security controller 18 decides to switch the set 14S of defense agents 14 from the resource-saving mode to the accuracy-enhancing mode for the feature detection task if *α*₃. (*P_{D} + N_{D}*) *> α*₂. *D_{D}.*

Further extended to the decision-making system 28, the security controller 18 in this case may base its mode selection on a set-wide accuracy metric 22A instead of or in addition to a set-wide resource consumption metric. In some embodiments, for example, the security controller 18 decides to switch the set 14S of defense agents from the accuracy-enhancing mode to the resource-saving mode for the decision-making task if *α*₃. (*P_{D} + N_{D}*) ≤ *α*₁*. M_{D} + α*₂*. D_{D},* where *α*₃. (*P_{D} + N_{D}*) is a set-wide accuracy metric 22A and where *α*₁*. M_{D} + α*₂*. D_{D}* is a set-wide accuracy threshold 22A-TH. That is, the security controller 18 decides to switch the set 14S of defense agents to the resource-saving mode for the decision-making if the weighted combination of the false positive rate and the false negative rate is less than a threshold, i.e., if there is enough accuracy to spare in favor of preserving resources. By contrast, the security controller 18 decides to switch the set 14S of defense agents 14 from the resource-saving mode to the accuracy-enhancing mode for the decision-making task if *α*₃. (*P_{D} + N_{D}*) *> α*₁*. M_{D} + α*₂*. D_{D},* where *α*₁*. M_{D} + α*₂*. D_{D}* is a set-wide accuracy threshold 22A-TH. That is, the security controller 18 decides to switch the set 14S of defense agents to the accuracy-enhancing mode for the decision-making task if the weighted combination of the false positive rate and the false negative rate is greater than or equal to a threshold, i.e., if the accuracy is low enough to justify increasing resource consumption.

Generally, then, as this example demonstrates, the security controller 18 may make the decision to switch the set 14S of defense agents 14 to the accuracy-enhancing mode for an anomaly detection task based on either: (i) comparison of a set-wide accuracy metric to a set-wide accuracy threshold for the anomaly detection task; or (ii) comparison of a set-wide resource consumption metric to a set-wide resource consumption threshold for the anomaly detection task.

In some embodiments, the security controller 18 may effectively apply game theory to its decisions. In this approach, there are two kinds of players of the game, defense players and attack players. The defense players in the game are defense agents 14 that aim to enhance anomaly detection accuracy and reduce resource consumption. The attack players are any malicious nodes or malicious defense agents that aim to reduce anomaly detection accuracy and increase resource consumption (so as to deplete resources available to legitimate defense agents 14). In these embodiments, the security controller 18 obtains a defense agent utility metric *U_{D}* for the set 14S of defense agents 14 as a function of the accuracy metric(s) 20 and the resource consumption metric(s) 22. The security controller 18 also obtains an attack utility metric *U_{A}* as a function of the defense utility metric *U_{D}* and an attack resource consumption metric *C_{A}* reflecting an extent of resources required for attackers to execute a cooperative attack on the communication network 10. The security controller 18 then controls whether the defense agents 14 in the set 14S are to perform one or more anomaly detection tasks, based on comparison of the defense agent utility metric *U_{D}* to the attack utility metric *U_{A}*.

For example, in some embodiments, the security controller 18 determines the defense agent utility metric *U_{D}* as *U_{D} = α*₁*. M_{D} + α*₂*. D_{D} - α*₃. (*P_{D} + N_{D}*) *- α*₃. *CD,* where *MD* is a rate at which the defense agents 14 in the set 14S (the monitoring system 24) determine respective features of anomalies, *D_{D}* is a rate at which the defense agents 14 in the set 14S (the detection system 26) detect anomalies, *P_{D}* is a set-wide false positive rate comprising a rate at which the defense agents 14 in the set 14S incorrectly detect anomalies, *N_{D}* is a set-wide false negative rate comprising a rate at which the defense agents 14 in the set 14S fail to detect anomalies, *C_{D}* is a set-wide resource consumption metric (e.g., in the form of a network cost rate generated by the defense agents 14), *M_{D}, D_{D}, P_{D}, N_{D}* and *C_{D}* ∈ [0,1], and *α*₁, *α*₂*, α*₃ E [0, 1] are weight parameters. And the security controller 18 may determine the attack utility metric *U_{A}* as *U_{A}* = -(*U_{D} + β. C_{A}*), where *C_{A}* is the attack resource consumption metric, *β* is a weight parameter, and *β* ∈ [0,1].

**Note, too,** that in some embodiments, the security controller 18 controls an initial mode of the set 14S of defense agents 14 according to the defense agent utility metric *U_{D}* and the attack utility metric *U_{A}* . For example, the initial mode (i.e., in the 'beginning') may be determined to be the accuracy-enhancing (active) mode if *U_{D}* ≥ *U_{A}.* In this case, the security controller 18 may effectively activate the monitoring system 24, the detection system 26, and the decision-making system 28 initially, and then adapt each system's mode according to the other embodiments herein. That is, according to some embodiments, after the initial mode selection, the security controller 18 controls the set 14S of defense agents 14 such that: $\left\{\begin{matrix}Switch Monitoring system to idle mode , & If {α}_{3} . {C}_{D} > {α}_{1} . {M}_{D} \\ Switch Monitoring system to active mode , & If {α}_{3} . \left({P}_{D}+{N}_{D}\right) > {α}_{1} . {M}_{D} \\ Switch Detection system to idle mode , & If {α}_{3} . {C}_{D} > {α}_{2} . {D}_{D} \\ Switch Detection system to active mode , & If {α}_{3} . \left({P}_{D}+{N}_{D}\right) > {α}_{2} . {D}_{D} \\ Switch Decision - making system to idle mode , & If {α}_{3} . \left({P}_{D}+{N}_{D}\right) \leq {α}_{1} . {M}_{D} + {α}_{2} . {D}_{D} \\ Swicth Decision - making system to active mode , & If {α}_{3} . \left({P}_{D}+{N}_{D}\right) > {α}_{1} . {M}_{D} + {α}_{2} . {D}_{D} ,\end{matrix}\right.$ Here, the resource-saving mode is termed idle mode since one or more of the defense agents or subsystems are idle with respect to a certain anomaly detection task. And the accuracy-enhancing mode is termed active mode since all defense agents or subsystems are active with respect to a certain anomaly detection task.

Generally, then, in some embodiments, the monitoring, detection, and decision-making systems 24, 26, 28 switch from the active mode to the idle mode to decrease the consumption of resources and switch back from the idle mode to the active mode when the number of false positives and false negatives increase promptly, e.g., within the neighborhood of a suspect target. For example, some embodiments switch the monitoring, detection, and decision-making systems 24, 26, 28 from the active mode to the idle mode to decrease the consumption of resources and switch the monitoring, detection, and decision-making systems 24, 26, 28 from idle mode to active mode in case when the number of false positive and false negative in the neighborhood area are high, with the goal to decrease further the false positive and false negative rates.

Consider now other ways to control the defense agents 14 in the set 14S based on the accuracy metric(s) 20 and the resource consumption metric(s) 22. In some embodiments, the security controller 18 controls whether and/or the extent to which the defense agents 14 in the set 14S collaborate with one another for performing anomaly detection. In such embodiments, the greater the collaboration, the greater the consumption of resources, but the better the accuracy of anomaly detection. Based on the accuracy and resource consumption metrics 20, 22, then, in some embodiments, the security controller 18 controls whether or which defense agents 14 in the set 14S operate in a so-called collaborative mode for performing anomaly detection collaboratively with one another and controls whether or which defense agents 14 in the set 14S operate in a so-called standalone mode for performing anomaly detection without collaborating with one another.

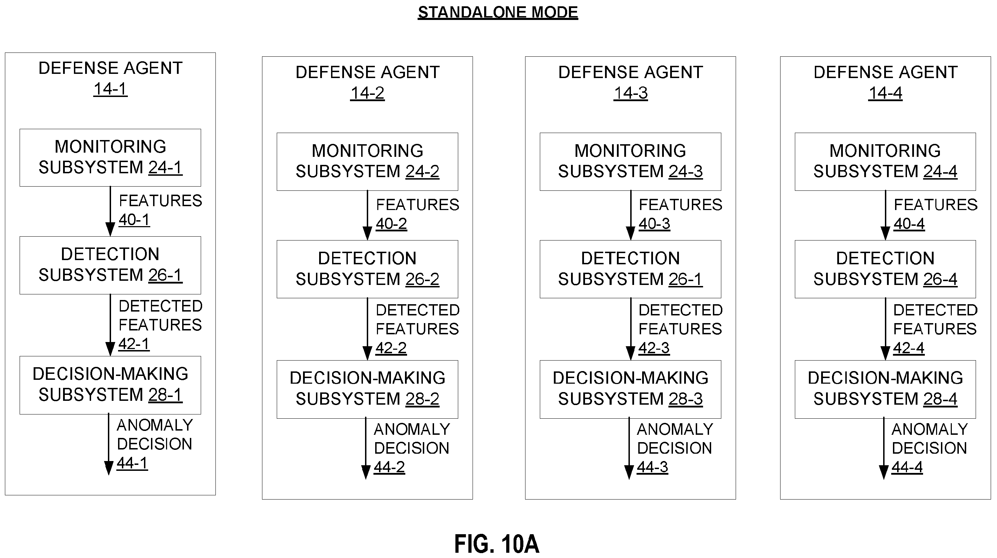

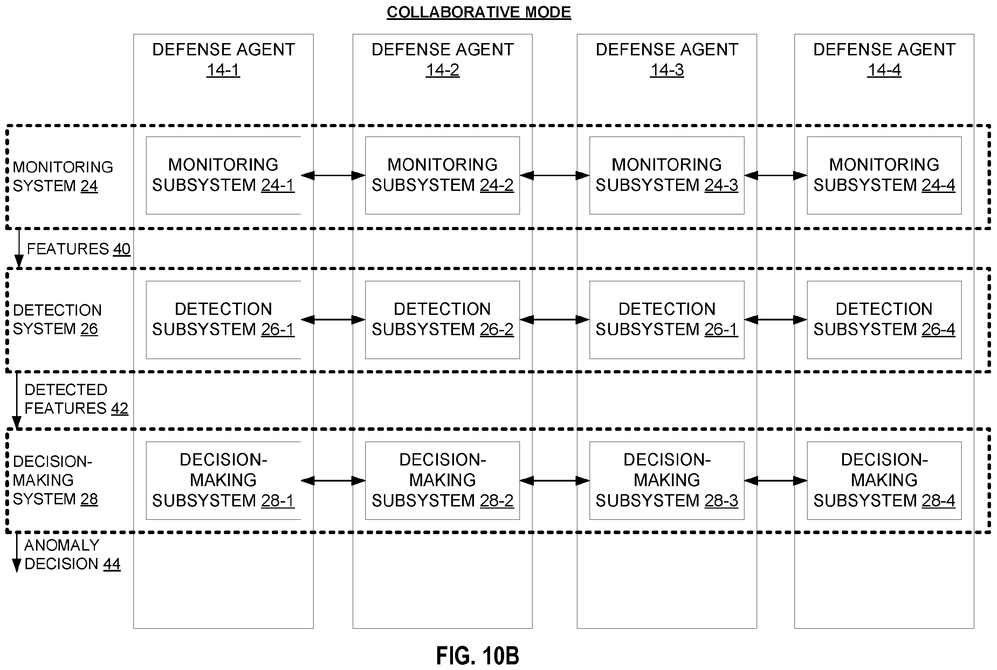

Figures 10A-10B illustrate the standalone mode and the collaborative mode according to some embodiments. As shown in Figure 10A, in the standalone mode, each defense agent 14 performs anomaly detection tasks independently, without collaborating with any other defense agent 14 in the set 14S. In Figure 10A, this is shown as each defense agent's monitoring subsystem independently determining features of anomalies to detect, each defense agent's detection subsystem independently detecting those features, and each defense agent's decision-making subsystem independently deciding whether or not anomalies are present. As shown in Figure 10B by contrast, in the collaborative mode, the monitoring subsystems 24-1...24-4 spanning the defense agents 14 collaborate with one another to determine the features 40 of anomalies to detect, the detection subsystems 26-1...26-4 spanning the defense agents 14 collaborate with one another to detect those features 40, and the decision-making subsystems 28-1...28-4 collaborate with one another to make decisions 44 about whether or not anomalies are present based on the detected features 42.

In this context, the security controller 18 in some embodiments obtains accuracy metric(s) 20 and/or resource consumption metric(s) 22 for each of the standalone mode and the collaborative mode. The security controller 18 then controls in which mode (the standalone mode or the collaborative mode) the defense agents 14 in the set 14S are to operate, based on the obtained metrics 20, 22.

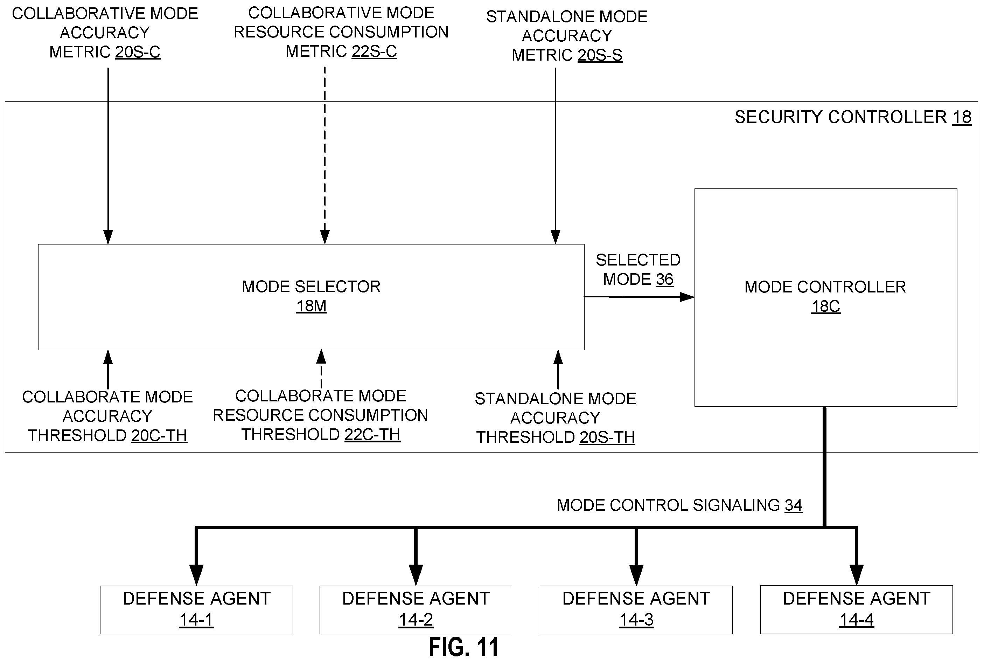

In one embodiment, the security controller 18 controls defense agents 14 in the set 14S to operate in the collaborative mode if each of one or more collaborative mode triggering criteria is met. By contrast, the security controller 18 controls defense agents 14 in the set 14S to operate in the standalone mode if each of one or more standalone mode triggering criteria is met. In this way, the defense agents 14 may effectively oscillate between the standalone mode and the collaborative mode, e.g., as needed to maintain a desired balance between accuracy and resource consumption. Figure 11 shows one example.

As shown in Figure 11, the security controller 18 includes a mode selector 18M that obtains a set-wide accuracy metric 20S-C (e.g., a set-wide false rate metric) for the collaborative mode and a set-wide accuracy metric 20S-S (e.g., a set-wide false rate metric) for the standalone mode. The mode selector 18M compares these metrics 20S-C, 20S-S to accuracy thresholds for the modes 20C-TH, 20S-TH. In one embodiment, the collaborative mode triggering criteria which triggers the collaborative mode includes the set-wide accuracy metric 20S-S for the standalone mode exceeding the accuracy threshold 20S-TH for the standalone mode, e.g., so that collaborative mode is selected if the accuracy in standalone mode is poor. Alternatively or additionally, the standalone mode triggering criteria which triggers the standalone mode may include a set-wide accuracy metric 20S (e.g., a set-wide false rate metric) for the collaborative mode falling below an accuracy threshold 20C-TH for the collaborative mode, e.g., so that standalone mode is selected if the accuracy in collaborative mode is high enough to support reduction in favor of reduced resource consumption. In some embodiments, though, the standalone triggering criteria may further include a set-wide resource consumption metric 22S-C for the collaborative mode exceeding a resource consumption threshold 22C-TH for the collaborative mode, e.g., so that standalone mode is selected if both the accuracy in collaborative mode is high enough and the resource consumption in collaborative mode is excessive. Generally, then, the mode selector 18M may effectively allow the defense agents 14 to collaborate with one another to improve anomaly detection accuracy, but prohibit that collaboration if the defense agents 14 consume excessive resources, e.g., so as to achieve a desired tradeoff between anomaly detection accuracy and resource consumption. Regardless, with the mode selector 18M having selected the mode 36 in which the set 14S of defense agents 14 is to operate, the mode controller 18C controls the defense agents 14 to operate in the selected mode 36, e.g., by transmitting mode control signaling 34 to the defense agents 14.

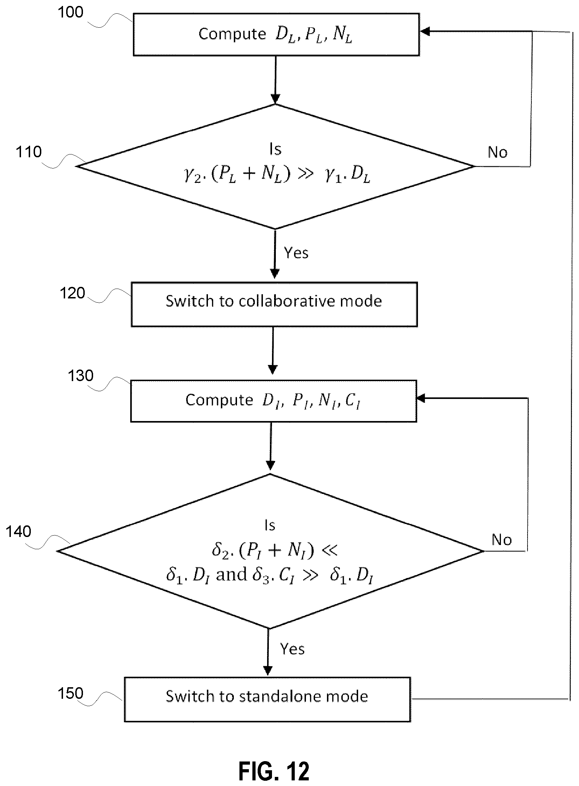

As a concrete example of some embodiments, the security controller 18 may control the defense agents 14 according to: $\left\{\begin{matrix}Switch to the collaborative mode , & If {γ}_{2} . \left({P}_{L}+{N}_{L}\right) ≫ {γ}_{1} . {D}_{L} \\ Switch to the standalone mode , & If {δ}_{2} . \left({P}_{I}+{N}_{I}\right) ≪ {δ}_{1} . {D}_{I} and {δ}_{3} . {C}_{I} ≫ {δ}_{1} . {D}_{I}\end{matrix}\right.$ where *γ*₂. (*P_{L} + N_{L}*) is the set-wide accuracy metric 20S-S for the standalone mode, *γ*₁*. D_{L}* is the accuracy threshold 20S-TH for the standalone mode, *δ*₂*.* (*P_{I} + N_{I}*) is the set-wide accuracy metric 20S-C for the collaborative mode, *δ*₁. *D_{I}* serves as both the accuracy threshold 20C-TH for the collaborative mode and the resource consumption threshold 22C-TH for the collaborative mode, and *δ*₃. *C_{I}* is the set-wide resource consumption metric 22S-C for the collaborative mode. Here, *γ*₁, *γ*₂, *δ*₁, *δ*₂, *δ*₃ are weight parameters, *P_{L}* is a set-wide false positive rate for the standalone mode, *N_{L}* is a set-wide false negative rate for the standalone mode, *D_{L}* is a set-wide anomaly detection rate for the standalone mode, *P_{I}* is a set-wide false positive rate for the collaborative mode, and *N_{I}* is a set-wide false negative rate for the collaborative mode, *D_{I}* is a set-wide anomaly detection rate for the collaborative mode. Figure 12 illustrates logic for mode selection in this case.

As shown in Figure 12, the security controller 18 computes *D_{L}, P_{L}, N_{L}* (Block 100). The security controller 18 then determines if *γ*₂. (*P_{L} + N_{L}*) » *γ*₁*. D_{L}* (Block 110). If not (NO at Block 110), the security controller 18 returns to Block 100 to re-compute *D_{L}, P_{L}, N_{L}.* But if so (YES at Block 110), the security controller 18 selects the collaborative mode and controls the defense agents 14 in the set 14S to switch to the collaborative mode (Block 120).

With the defense agents 14 in the collaborative mode, the security controller 18 computes *D_{I}, P_{I}, N_{I}, C_{I}* (Block 130). The security controller 18 then determines if *δ*₂. (*P_{I} + N_{I}*) *« δ*₁*. D_{I} and δ*₃*. C_{I}* » *δ*₁. *D_{I}* (Block 140). If not (NO at Block 140), the security controller 18 returns to Block 130 to re-compute *D_{I}, P_{I}, N_{I}, C_{I}*. But if so (YES at Block 140), the security controller 18 selects the standalone mode and controls the defense agents 14 in the set 14S to switch to the standalone mode (Block 150). The process then repeats.

In some embodiment, the security controller 18 selects between the standalone mode and the collaborative mode in this way on the basis of utility functions representing the standalone mode and the collaborative mode. For example, the utility function for the standalone mode may be represented as *U_{S} = γ*₁*. D_{L}* - [*γ*₂. (*P_{L} + N_{L}*) *+ γ*₃*. C_{L}*]*.* And the utility function for the collaborative mode may be represented as *U_{C} = δ*₁. *D_{I}* - [*δ*₂. (*P_{I} + N_{I}*) + *δ*₃. *C_{I}*]*.*

In some embodiments, though, the security controller 18 applies an exception to the above logic for mode selection, in a way that different systems 24, 26, 28 may operate in different modes. In particular, if *γ*₃*. C_{L}* » *γ*₁*. D_{L},* then the security controller 18 selects the collaborative mode for the monitoring system 24 but selects the standalone mode for the detection system 26 and the decision-making system 28. Conversely, if *γ*₂. (*P_{L} + N_{L}*) » *γ*₁*. D_{L}* and *δ*₁. *D_{I}* » *δ*₃. *C_{I}* then the security controller 18 selects the standalone mode for the monitoring system 24 but selects the collaborative mode for the detection system 26 and the decision-making system 28.

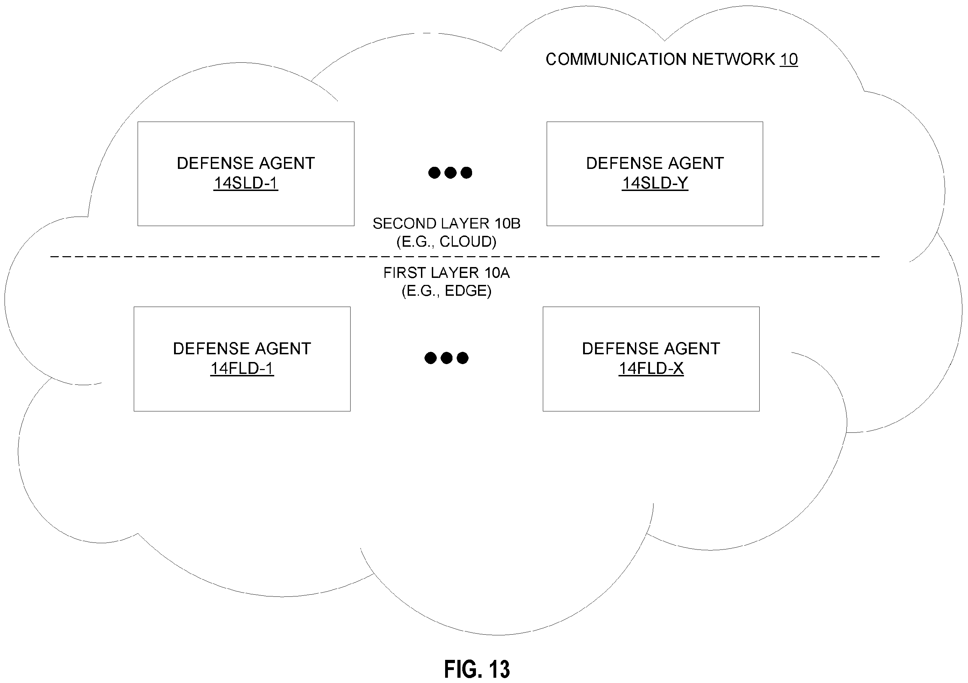

Note that, while embodiments herein have described defense agents 14 as being distributed in the communication network 10, the defense agents 14 in the set 14S may in fact be distributed at different hierarchical levels. For example, as shown in Figure 13, the defense agents 14 in the set 14S may include one or more so-called 'first' layer defense (FLD) agents 14FLD-1...14FLD-X as well as one or more 'second' layer defense (SLD) agents 14SLD-1....14SLD-Y. The first layer 10A of the communication network 10 may for example be an edge network, a radio access network, or a core network, whereas the second layer 10B of the communication network 10 may be a cloud network. In one such embodiment, there is a single SLD agent in the second layer 10B that operates as a common point of cooperation for multiple FLD agents in the first layer 10A, e.g., an FLD agent deployed at each edge server, at each network function, etc. The single SLD agent may for example be a centralized defense agent that covers the set 14S of defense agents, e.g., for making the ultimate decisions about whether or not anomalies are detected. Indeed, the decision may require collaboration between the FLD agents and the SLD agent to decide whether a target is an attacker or not. The SLD agent may furthermore provide recommended actions to FLD agents on how to respond to a detected anomaly. In some embodiments, then, the FLD agents and the SLD agent interacts with one another with a goal to ensure a consensus in terms of anomaly detection accuracy and resource consumption. The SLD agent may be realized as a Security Information and Event Management (SEIM) entity.

Note further that, in some embodiments, a feature detection system herein may be employ multiple detection techniques, e.g., a binary detection technique and a hybrid technique. The binary detection technique in this case may be based on a lightweight machine learning algorithm (such as a binary Support-Vector Machine) or rules-based attacks detection, where the output of the binary detection technique is either attack or normal (i.e., 1 or 0). The hybrid detection technique is a robust technique which is based on a combination between the rules detection technique and a machine learning algorithm, and the main goal of the hybrid detection technique is a reduction over time of the false positive and false negative rates. However, this reduction could require a high consumption of resource (such as energy and computation overhead).

Generally, some embodiments herein enhance or harden security of the communication network 10 by improving the accuracy with which anomalies (e.g., attacks) are detected, especially for detection frameworks that generate high false positives and high false negatives (e.g., when complex and unknown attacks are occurring, such as zero-day attacks). In fact, some embodiments improve the accuracy of anomaly detection over time, e.g., as the security controller 18 learns features of anomalies to detect. Importantly, too, some embodiments herein exhibit a low network cost in terms of resource consumption to achieve a high level of security as compared to traditional detection frameworks.

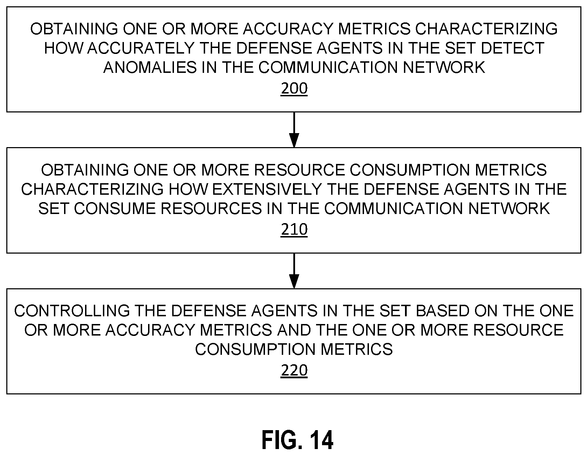

In view of the modifications and variations herein, Figure 14 depicts a method performed by a security controller 18 for a communication network 10 in which defense agents 14 in a set 14S are distributed for anomaly detection in the communication network 10 in accordance with particular embodiments. The method includes obtaining one or more accuracy metrics 20 characterizing how accurately the defense agents 14 in the set 14S detect anomalies in the communication network 10 (Block 200). The method also includes obtaining one or more resource consumption metrics 22 characterizing how extensively the defense agents 14 in the set 14S consume resources in the communication network 10 (Block 210). The method further comprises controlling the defense agents 14 in the set 14S based on the one or more accuracy metrics 20 and the one or more resource consumption metrics 22 (Block 220).

In some embodiments, the one or more accuracy metrics 20 include a set-wide false positive rate comprising a rate at which the defense agents 14 in the set 14S incorrectly detect anomalies, a set-wide false negative rate comprising a rate at which the defense agents 14 in the set 14S fail to detect anomalies, and/or a set-wide false rate comprising a combination of the set-wide false positive rate and the set-wide false negative rate. Alternatively or additionally, the one or more accuracy metrics 20 include, for each of the defense agents 14 in the set 14S, an agent-specific false positive rate comprising a rate at which the defense agent incorrectly detects anomalies, an agent-specific false negative rate comprising a rate at which the defense agent fails to detect anomalies, and/or an agent-specific false rate comprising a combination of the agent-specific false positive rate and the agent-specific false negative rate.

In some embodiments, controlling the defense agents 14 in the set 14S comprises, based on the one or more accuracy metrics 20 and the one or more resource consumption metrics 22, controlling whether and/or how each defense agent in the set 14S performs each of one or more anomaly detection tasks.

In some embodiments, controlling the defense agents 14 in the set 14S comprises, for each of one or more anomaly detection tasks, controlling which one or more of the defense agents 14 in the set 14S are to perform the anomaly detection task and which one or more of **the defense** agents 14 in the set 14S, if any, are not to perform the anomaly detection task, based on the one or more accuracy metrics 20 and the one or more resource consumption metrics 22.

In one embodiment, for example, controlling the defense agents 14 comprises, for at least one of the one or more anomaly detection tasks, making a decision to switch the set from an accuracy-enhancing mode in which all of the defense agents 14 in the set 14S perform the anomaly detection task to a resource-saving mode in which at least one of the defense agents 14 in the set 14S does not perform the anomaly detection task, based on comparison of a set-wide resource consumption metric to a set-wide resource consumption threshold for the anomaly detection task. Controlling the defense agents 14 the comprises, based on the decision, determining which one or more of the defense agents 14 in the set 14S are still to perform the anomaly detection task in the resource-saving mode and which one or more of the defense agents 14 in the set 14S are not to perform the anomaly detection task in the resource-saving mode, based on agent-specific accuracy metrics for the respective defense agents 14.

In other embodiments, controlling the defense agents 14 comprises, for at least one of the one or more anomaly detection tasks, making a decision to switch the set from a resource-saving mode in which at least one of the defense agents 14 in the set 14S does not perform the anomaly detection task to an accuracy-enhancing mode in which all of the defense agents 14 in the set 14S perform the anomaly detection task, based on: (i) comparison of a set-wide accuracy metric to a set-wide accuracy threshold for the anomaly detection task; or (ii) comparison of a set-wide resource consumption metric to a set-wide resource consumption threshold for the anomaly detection task.

In some embodiments, controlling the defense agents 14 comprises obtaining a defense agent utility metric for the set of defense agents 14 as a function of the one or more accuracy metrics 20 and the one or more resource consumption metrics 22, obtaining an attack utility metric as a function of the defense agent utility metric and an attack resource consumption metric reflecting an extent of resources required for attackers to execute a cooperative attack on the communication network 10, and controlling whether the defense agents 14 in the set 14S are to perform one or more anomaly detection tasks, based on comparison of the defense agent utility metric to the attack utility metric.

In one such embodiment, the defense agent utility metric is determined as *U_{D} = α*₁*. M_{D} + α*₂*. D_{D} - α*₃*.* (*P_{D} + N_{D}*) *- α*₃. *C_{D},* where *M_{D}* is a rate at which the defense agents 14 in the set 14S determine respective features of anomalies, *D_{D}* is a rate at which the defense agents 14 in the set 14S detect anomalies, *P_{D}* is a set-wide false positive rate comprising a rate at which the defense agents 14 in the set 14S incorrectly detect anomalies, *N_{D}* is a set-wide false negative rate comprising a rate at which the defense agents 14 in the set 14S fail to detect anomalies, *C_{D}* is a set-wide resource consumption metric, *M_{D}, D_{D}, P_{D}, N_{D}* and *C_{D}* ∈ [0,1], and *α*₁, *α*₂*, α*₃ ∈ [0,1] are weight parameters. In this case, the attack utility metric is determined as *U_{A} = -* (*U_{D} + β. C_{A}*), **where** *C_{A}* is the attack resource consumption metric, *β* is a weight parameter, and β ∈ [0, 1].

In this case, controlling the defense agents 14 comprises, for a feature monitoring task involving determining respective features of anomalies to be detected: (i) if *α*₃. *C_{D} > α*₁*. M_{D},* switching the set from an accuracy-enhancing mode in which all of the defense agents 14 in the set 14S perform the feature monitoring task to a resource-saving mode in which at least one of the defense agents 14 in the set 14S does not perform the feature monitoring task; or (ii) if *α*₃. (*P_{D} + N_{D}*) *> α*₁*. M_{D},* switching the set from a resource-saving mode in which at least one of the defense agents 14 in the set 14S does not perform the feature monitoring task to an accuracy-enhancing mode in which all of the defense agents 14 in the set 14S perform the feature monitoring task. Controlling also comprises, for a feature detection task involving detecting the determined features, (i) if *α*₃. *C_{D} > α*₂. *D_{D},* switching the set from an accuracy-enhancing mode in which all of the defense agents 14 in the set 14S perform the feature detection task to a resource-saving mode in which at least one of the defense agents 14 in the set 14S does not perform the feature detection task; or (ii) if *α*₃. (*P_{D} + N_{D}*) *> α*₂. *D_{D},* switching the set from a resource-saving mode in which at least one of the defense agents 14 in the set 14S does not perform the feature detection task to an accuracy-enhancing mode in which all of the defense agents 14 in the set 14S perform the feature detection task. Controlling further comprises, for a decision-making task involving making decisions on whether or not anomalies are present based upon detected features: (i) if *α*₃. (*P_{D} + N_{D}*) ≤ *α*₁*. M_{D} + α*₂*. D_{D},* switching the set from an accuracy-enhancing mode in which all of the defense agents 14 in the set 14S perform the decision-making task to a resource-saving mode in which at least one of the defense agents 14 in the set 14S does not perform the decision-making task; or (ii) if *α*₃. (*P_{D} + N_{D}*) *> α*₁*. M_{D} + α*₂*. D_{D},* switching the set from a resource-saving mode in which at least one of the defense agents 14 in the set 14S does not perform the decision-making task to an accuracy-enhancing mode in which all of the defense agents 14 in the set 14S perform the decision-making task.

In some embodiments, the one or more anomaly detection tasks include a feature monitoring task involving determining respective features of anomalies to be detected, a feature detection task involving detecting the determined features, and/or a decision-making task involving making decisions on whether or not anomalies are present based upon detected features.

In some embodiments, controlling the defense agents 14 in the set 14S alternatively or additionally comprises, based on the one or more accuracy metrics 20 and the one or more resource consumption metrics 22, controlling whether or which defense agents 14 in the set 14S operate in a collaborative mode for performing anomaly detection collaboratively with one another and controlling whether or which defense agents 14 in the set 14S operate in a standalone mode for performing anomaly detection without collaborating with one another.

**In one such** embodiment, the one or more accuracy metrics 20 are obtained for each of the collaborative mode and the standalone mode. In this case, said controlling comprises controlling defense agents 14 in the set 14S to operate in the collaborative mode if each of one or more collaborative mode triggering criteria is met, wherein the one or more collaborative mode triggering criteria include a set-wide accuracy metric for the standalone mode exceeding an accuracy threshold for the standalone mode, and wherein the set 14S-wide accuracy metric is a set-wide false rate metric. Controlling may then comprise controlling defense agents 14 in the set 14S to operate in the standalone mode if each of one or more standalone mode triggering criteria is met, wherein the one or more standalone mode triggering criteria include a set-wide accuracy metric for the collaborative mode falling below an accuracy threshold for the collaborative mode, wherein the set 14S-wide accuracy metric is a set-wide false rate metric. In one embodiment, for example, the accuracy threshold for the standalone mode is a function of a set-wide anomaly detection rate of the defense agents 14 in the set 14S while operating in the standalone mode, and/or the accuracy threshold for the collaborative mode is a function of a set-wide anomaly detection rate of the defense agents 14 in the set 14S while operating in the collaborative mode. Alternatively or additionally, the one or more resource consumption metrics 22 are obtained for each of the collaborative mode and the standalone mode, in which case the one or more standalone mode triggering criteria further include a set-wide resource consumption metric obtained for the collaborative mode exceeding a resource consumption threshold for the collaborative mode.

In some embodiments, the set-wide false rate metric for the standalone mode is equal to *γ*₂. (*P_{L} + N_{L}*), where *γ*₂ is a weight parameter, *P_{L}* is a set-wide false positive rate for the standalone mode, and *N_{L}* is a set-wide false negative rate for the standalone mode. And the false rate threshold for the standalone mode is equal to *γ*₁*. D_{L},* where *γ*₁ is a weight parameter, and *D_{L}* is a set-wide anomaly detection rate while operating in the standalone mode. And the set-wide false rate metric for the collaborative mode is equal to *δ*₂. (*P_{I} + N_{I}*)*,* where *δ*₂ is a weight parameter, *P_{I}* is a set-wide false positive rate for the collaborative mode, and *N_{I}* is a set-wide false negative rate for the collaborative mode. And the false rate threshold for the collaborative mode is equal to *δ*₁. *D_{I},* where *δ*₁ is a weight parameter, and *D_{I}* is a set-wide anomaly detection rate while operating in the collaborative mode.

In some embodiments, the multiple defense agents 14 include multiple first layer defense agents 14 distributed in the communication network 10 and a second layer defense agent, each of the first layer defense agents 14 is configured to determine respective features of anomalies in the communication network 10, detect the determined features of the anomalies, and make decisions on whether or not anomalies are present based upon features detected, and the second layer defense agent is configured to collaborate with the multiple first layer defense agents 14 to assist the first layer defense agents 14 to collaboratively decide whether or not anomalies are present in the communication network 10.

In some embodiments, said controlling comprises, based on the one or more accuracy metrics 20 and the one or more resource consumption metrics 22, identifying a defense agent in the set 14S as being malicious, and controlling the identified defense agent to stop performing anomaly detection.

Embodiments herein also include corresponding apparatuses. Embodiments herein for instance include a security controller 18 configured to perform any of the steps of any of the embodiments described above for the security controller 18.

Embodiments also include a security controller 18 comprising processing circuitry and power supply circuitry. The processing circuitry is configured to perform any of the steps of any of the embodiments described above for the security controller 18. The power supply circuitry is configured to supply power to the security controller 18.

Embodiments further include a security controller 18 comprising processing circuitry. The processing circuitry is configured to perform any of the steps of any of the embodiments described above for the security controller 18. **In** some embodiments, the security controller 18 further comprises communication circuitry.

Embodiments further include a security controller 18 comprising processing circuitry and memory. The memory contains instructions executable by the processing circuitry whereby the security controller 18 is configured to perform any of the steps of any of the embodiments described above for the security controller 18.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

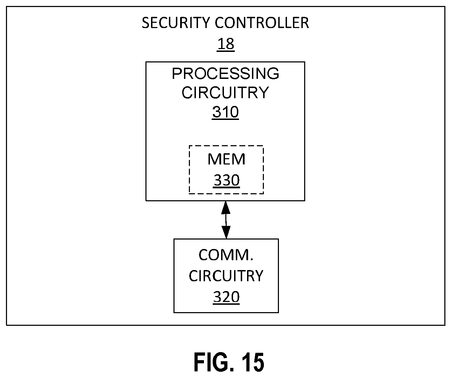

Figure 15 illustrates a security controller 18 as implemented in accordance with one or more embodiments. As shown, the security controller 18 includes processing circuitry 310 and communication circuitry 320. The communication circuitry 320 is configured to transmit and/or receive information to and/or from one or more other nodes, e.g., via any communication technology. The processing circuitry 310 is configured to perform processing described above, e.g., in Figure 14, such as by executing instructions stored in memory 330. The processing circuitry 310 in this regard may implement certain functional means, units, or modules.

Those skilled in the art will also appreciate that embodiments herein further include corresponding computer programs.

A computer program comprises instructions which, when executed on at least one processor of a security controller 18, cause the security controller 18 to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a security controller 18, cause the security controller 18 to perform as described above.

Embodiments further include a computer program product comprising program code portions for performing the steps of any of the embodiments herein when the computer program product is executed by a security controller 18. This computer program product may be stored on a computer readable recording medium.

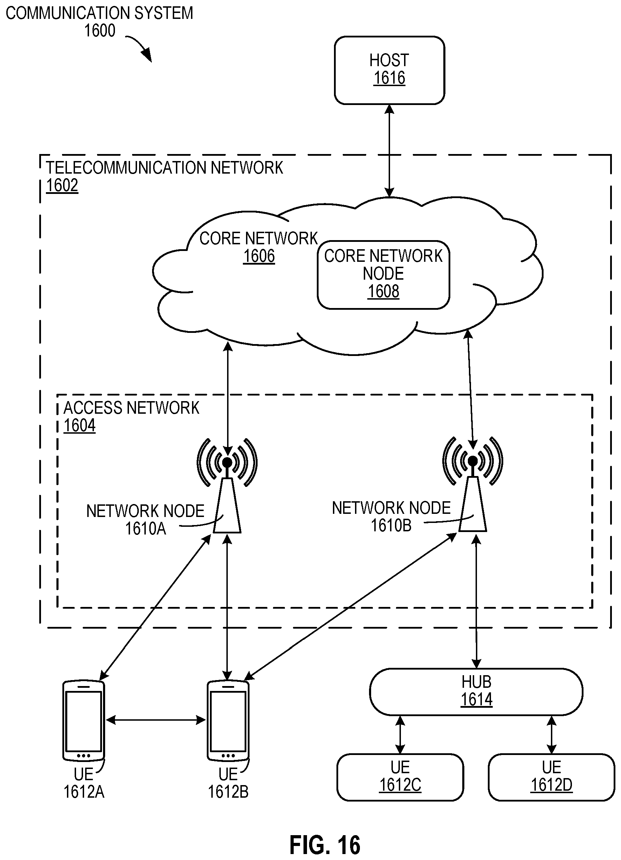

Figure 16 shows an example of a communication system 1600 in which some embodiments herein may be applied.

In the example, the communication system 1600 includes a telecommunication network 1602 that includes an access network 1604, such as a radio access network (RAN), and a core network 1606, which includes one or more core network nodes 1608. The access network 1604 includes one or more access network nodes, such as network nodes 1610a and 1610b (one or more of which may be generally referred to as network nodes 1610), or any other similar 3^{rd} Generation Partnership Project (3GPP) access node or non-3GPP access point. The network nodes 1610 facilitate direct or indirect connection of user equipment (UE), such as by connecting UEs 1612a, 1612b, 1612c, and 1612d (one or more of which may be generally referred to as UEs 1612) to the core network 1606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1600 may include any number of wired or wireless networks, network nodes, UEs, and/or any other components or systems that may facilitate or participate in the communication of data and/or signals whether via wired or wireless connections. The communication system 1600 may include and/or interface with any type of communication, telecommunication, data, cellular, radio network, and/or other similar type of system.

The UEs 1612 may be any of a wide variety of communication devices, including wireless devices arranged, configured, and/or operable to communicate wirelessly with the network nodes 1610 and other communication devices. Similarly, the network nodes 1610 are arranged, capable, configured, and/or operable to communicate directly or indirectly with the UEs 1612 and/or with other network nodes or equipment in the telecommunication network 1602 to enable and/or provide network access, such as wireless network access, and/or to perform other functions, such as administration in the telecommunication network 1602.

In the depicted example, the core network 1606 connects the network nodes 1610 to one or more hosts, such as host 1616. These connections may be direct or indirect via one or more intermediary networks or devices. In other examples, network nodes may be directly coupled to hosts. The core network 1606 includes one more core network nodes (e.g., core network node 1608) that are structured with hardware and software components. Features of these components may be substantially similar to those described with respect to the UEs, network nodes, and/or hosts, such that the descriptions thereof are generally applicable to the corresponding components of the core network node 1608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1616 may be under the ownership or control of a service provider other than an operator or provider of the access network 1604 and/or the telecommunication network 1602, and may be operated by the service provider or on behalf of the service provider. The host 1616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1600 of Figure 16 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1602 is a cellular network that implements 3GPP standardized features. Accordingly, the telecommunications network 1602 may support network slicing to provide different logical networks to different devices that are connected to the telecommunication network 1602. For example, the telecommunications network 1602 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs 1612 are configured to transmit and/or receive information without direct human interaction. For instance, a UE may be designed to transmit information to the access network 1604 on a predetermined schedule, when triggered by an internal or external event, or in response to requests from the access network 1604. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1614 communicates with the access network 1604 to facilitate indirect communication between one or more UEs (e.g., UE 1612c and/or 1612d) and network nodes (e.g., network node 1610b). In some examples, the hub 1614 may be a controller, router, content source and analytics, or any of the other communication devices described herein regarding UEs. For example, the hub 1614 may be a broadband router enabling access to the core network 1606 for the UEs. As another example, the hub 1614 may be a controller that sends commands or instructions to one or more actuators in the UEs. Commands or instructions may be received from the UEs, network nodes 1610, or by executable code, script, process, or other instructions in the hub 1614. As another example, the hub 1614 may be a data collector that acts as temporary storage for UE data and, in some embodiments, may perform analysis or other processing of the data. As another example, the hub 1614 may be a content source. For example, for a UE that is a VR headset, display, loudspeaker or other media delivery device, the hub 1614 may retrieve VR assets, video, audio, or other media or data related to sensory information via a network node, which the hub 1614 then provides to the UE either directly, after performing local processing, and/or after adding additional local content. In still another example, the hub 1614 acts as a proxy server or orchestrator for the UEs, in particular in if one or more of the UEs are low energy IoT devices.

The hub 1614 may have a constant/persistent or intermittent connection to the network node 1610b. The hub 1614 may also allow for a different communication scheme and/or schedule between the hub 1614 and UEs (e.g., UE 1612c and/or 1612d), and between the hub 1614 and the core network 1606. In other examples, the hub 1614 is connected to the core network 1606 and/or one or more UEs via a wired connection. Moreover, the hub 1614 may be configured to connect to an M2M service provider over the access network 1604 and/or to another UE over a direct connection. In some scenarios, UEs may establish a wireless connection with the network nodes 1610 while still connected via the hub 1614 via a wired or wireless connection. In some embodiments, the hub 1614 may be a dedicated hub - that is, a hub whose primary function is to route communications to/from the UEs from/to the network node 1610b. In other embodiments, the hub 1614 may be a non-dedicated hub - that is, a device which is capable of operating to route communications between the UEs and network node 1610b, but which is additionally capable of operating as a communication start and/or end point for certain data channels.

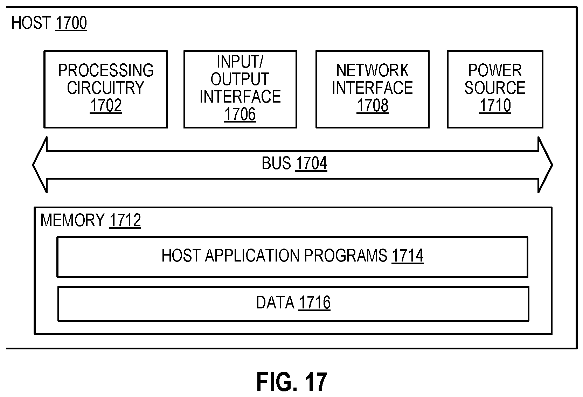

Figure 17 is a block diagram of a host 1700, which may be an embodiment of the host 1616 of Figure 16, in accordance with various aspects described herein. As used herein, the host 1700 may be or comprise various combinations hardware and/or software, including a standalone server, a blade server, a cloud-implemented server, a distributed server, a virtual machine, container, or processing resources in a server farm. The host 1700 may provide one or more services to one or more UEs.

The host 1700 includes processing circuitry 1702 that is operatively coupled via a bus 1704 to an input/output interface 1706, a network interface 1708, a power source 1710, and a memory 1712. Other components may be included in other embodiments. Features of these components may be substantially similar to those described with respect to the devices of previous figures, such as Figures 17 and 18, such that the descriptions thereof are generally applicable to the corresponding components of host 1700.

The memory 1712 may include one or more computer programs including one or more host application programs 1714 and data 1716, which may include user data, e.g., data generated by a UE for the host 1700 or data generated by the host 1700 for a UE. Embodiments of the host 1700 may utilize only a subset or all of the components shown. The host application programs 1714 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1714 may also provide for user authentication and licensing checks and may periodically report health, routes, and content availability to a central node, such as a device in or on the edge of a core network. Accordingly, the host 1700 may select and/or indicate a different host for over-the-top services for a UE. The host application programs 1714 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

Notably, modifications and other embodiments of the present disclosure will come to mind to one skilled in the art having the benefit of the teachings presented in the foregoing descriptions and the associated drawings. Therefore, it is to be understood that the present disclosure is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method performed by a security controller (18) for a communication network (10) in which defense agents (14) in a set (14S) are distributed for anomaly detection in the communication network (10), the method comprising:
obtaining (200) one or more accuracy metrics (20) characterizing how accurately the defense agents (14) in the set (14S) detect anomalies in the communication network (10);
obtaining (210) one or more resource consumption metrics (22) characterizing how extensively the defense agents (14) in the set (14S) consume resources in the communication network (10); and
controlling (220) the defense agents (14) in the set (14S) based on the one or more accuracy metrics (20) and the one or more resource consumption metrics (22)
wherein controlling the defense agents (14) in the set (14S) comprises, for each of one or more anomaly detection tasks, controlling which one or more of the defense agents (14) in the set (14S) are to perform the anomaly detection task and which one or more of the defense agents (14) in the set (14S), if any, are not to perform the anomaly detection task, based on the one or more accuracy metrics (20) and the one or more resource consumption metrics (22),
**characterized in that** said controlling comprises, for at least one of the one or more anomaly detection tasks:
making a decision to switch the set from an accuracy-enhancing mode in which all of the defense agents (14) in the set (14S) perform the anomaly detection task to a resource-saving mode in which at least one of the defense agents (14) in the set (14S) does not perform the anomaly detection task, based on comparison of a set-wide resource consumption metric to a set-wide resource consumption threshold for the anomaly detection task; and
based on the decision, determining which one or more of the defense agents (14) in the set (14S) are still to perform the anomaly detection task in the resource-saving mode and which one or more of the defense agents (14) in the set (14S) are not to perform the anomaly detection task in the resource-saving mode, based on agent-specific accuracy metrics for the respective defense agents (14).

2. The method of claim 1, wherein the one or more accuracy metrics (20) include:
a set-wide false positive rate comprising a rate at which the defense agents (14) in the set (14S) incorrectly detect anomalies, a set-wide false negative rate comprising a rate at which the defense agents (14) in the set (14S) fail to detect anomalies, and/or a set-wide false rate comprising a combination of the set-wide false positive rate and the set-wide false negative rate; and/or
for each of the defense agents (14) in the set (14S), an agent-specific false positive rate comprising a rate at which the defense agent incorrectly detects anomalies, an agent-specific false negative rate comprising a rate at which the defense agent fails to detect anomalies, and/or an agent-specific false rate comprising a combination of the agent-specific false positive rate and the agent-specific false negative rate.

3. The method of any of claims 1-2, wherein controlling the defense agents (14) in the set (14S) comprises, based on the one or more accuracy metrics (20) and the one or more resource consumption metrics (22), controlling whether and/or how each defense agent in the set (14S) performs each of one or more anomaly detection tasks.

4. The method of any of claims 1-3, wherein said controlling comprises, for at least one of the one or more anomaly detection tasks, making a decision to switch the set from the resource-saving mode in which at least one of the defense agents (14) in the set (14S) does not perform the anomaly detection task to the accuracy-enhancing mode in which all of the defense agents (14) in the set (14S) perform the anomaly detection task, based on:
comparison of a set-wide accuracy metric to a set-wide accuracy threshold for the anomaly detection task; or
comparison of the set-wide resource consumption metric to the set-wide resource consumption threshold for the anomaly detection task.

5. The method of any of claims 1-4, wherein said controlling comprises:
obtaining a defense agent utility metric for the set of defense agents (14) as a function of the one or more accuracy metrics (20) and the one or more resource consumption metrics (22);
obtaining an attack utility metric as a function of the defense agent utility metric and an attack resource consumption metric reflecting an extent of resources required for attackers to execute a cooperative attack on the communication network (10); and
**controlling** whether the defense agents (14) in the set (14S) are to perform one or more anomaly detection tasks, based on comparison of the defense agent utility metric to the attack utility metric.

6. The method of claim 5, wherein:
the defense agent utility metric is determined as *U_{D} = α*₁*. M_{D} + α*₂*. D_{D} - α*₃*.* (*P_{D} + N_{D}*) *- α*₃. *C_{D},* where *M_{D}* is a rate at which the defense agents (14) in the set (14S) determine respective features of anomalies, *D_{D}* is a rate at which the defense agents (14) in the set (14S) detect anomalies, *P_{D}* is a set-wide false positive rate comprising a rate at which the defense agents (14) in the set (14S) incorrectly detect anomalies, *N_{D}* is a set-wide false negative rate comprising a rate at which the defense agents (14) in the set (14S) fail to detect anomalies, *C_{D}* is the set-wide resource consumption metric, *M_{D}, D_{D}, P_{D}, N_{D}* and *C_{D}* ∈ [0,1], and *α*₁, *α*₂, *α*₃ E [0,1] are weight parameters;
the attack utility metric is determined as *U_{A} =* -(*U_{D} + β. C_{A}*), where *C_{A}* is the attack resource consumption metric, *β* is a weight parameter, and *β* ∈ [0, 1].

7. The method of claim 6, wherein said controlling comprises:
for a feature monitoring task involving determining respective features of anomalies to be detected:
if *α*₃. *C_{D} > α*₁*. M_{D},* switching the set from an accuracy-enhancing mode in which all of the defense agents (14) in the set (14S) perform the feature monitoring task to a resource-saving mode in which at least one of the defense agents (14) in the set (14S) does not perform the feature monitoring task; or
if *α*₃. (*P_{D} + N_{D}*) *> α*₁*. M_{D},* switching the set from the resource-saving mode in which at least one of the defense agents (14) in the set (14S) does not perform the feature monitoring task to the accuracy-enhancing mode in which all of the defense agents (14) in the set (14S) perform the feature monitoring task;
for a feature detection task involving detecting the determined features:
if *α*₃. *C_{D} > α*₂. *D_{D},* switching the set from an accuracy-enhancing mode in which all of the defense agents (14) in the set (14S) perform the feature detection task to a resource-saving mode in which at least one of the defense agents (14) in the set (14S) does not perform the feature detection task; or
if *α*₃. (*P_{D} + N_{D}*) *> α*₂. *D_{D},* switching the set from the resource-saving mode in which at least one of the defense agents (14) in the set (14S) does not perform the feature detection task to the accuracy-enhancing mode in which all of the defense agents (14) in the set (14S) perform the feature detection task;
for a decision-making task involving making decisions on whether or not anomalies are present based upon detected features:
if *α*₃. (*P_{D} + N_{D}*) ≤ *α*₁*. M_{D} + α*₂*. D_{D},* switching the set from an accuracy-enhancing mode in which all of the defense agents (14) in the set (14S) perform the decision-making task to a resource-saving mode in which at least one of the defense agents (14) in the set (14S) does not perform the decision-making task; or
if *α*₃. (*P_{D} + N_{D}*) *> α*₁*. M_{D} + α*₂*. D_{D},* switching the set from the resource-saving mode in which at least one of the defense agents (14) in the set (14S) does not perform the decision-making task to the accuracy-enhancing mode in which all of the defense agents (14) in the set (14S) perform the decision-making task.

8. The method of any of claims 1-7, wherein controlling the defense agents (14) in the set (14S) comprises, based on the one or more accuracy metrics (20) and the one or more resource consumption metrics (22), controlling whether or which defense agents (14) in the set (14S) operate in a collaborative mode for performing anomaly detection collaboratively with one another and controlling whether or which defense agents (14) in the set (14S) operate in a standalone mode for performing anomaly detection without collaborating with one another.

9. The method of claim 8, wherein the one or more accuracy metrics (20) are obtained for each of the collaborative mode and the standalone mode, wherein said controlling comprises:
controlling defense agents (14) in the set (14S) to operate in the collaborative mode if each of one or more collaborative mode triggering criteria is met, wherein the one or more collaborative mode triggering criteria include a set-wide accuracy metric for the standalone mode exceeding an accuracy threshold for the standalone mode, wherein the set (14S)-wide accuracy metric is a set-wide false rate metric; and
**controlling** defense agents (14) in the set (14S) to operate in the standalone mode if each of one or more standalone mode triggering criteria is met, wherein the one or more standalone mode triggering criteria include a set-wide accuracy metric for the collaborative mode falling below an accuracy threshold for the collaborative mode, wherein the set (14S)-wide accuracy metric is a set-wide false rate metric.

10. The method of claim 9, wherein the accuracy threshold for the standalone mode is a function of a set-wide anomaly detection rate of the defense agents (14) in the set (14S) while operating in the standalone mode, and/or wherein the accuracy threshold for the collaborative mode is a function of a set-wide anomaly detection rate of the defense agents (14) in the set (14S) while operating in the collaborative mode.

11. The method of any of claims 9-10, wherein the one or more resource consumption metrics (22) are obtained for each of the collaborative mode and the standalone mode, and wherein the one or more standalone mode triggering criteria further include a set-wide resource consumption metric obtained for the collaborative mode exceeding a resource consumption threshold for the collaborative mode.

12. The method of any of claims 9-11, wherein:
the set-wide false rate metric for the standalone mode is equal to *γ*₂. (*P_{L} + N_{L}*), where *γ*₂ is a weight parameter, *P_{L}* is a set-wide false positive rate for the standalone mode, and *N_{L}* is a set-wide false negative rate for the standalone mode;
the false rate threshold for the standalone mode is equal to *γ*₁*. D_{L},* where *γ*₁ is a weight parameter, and *D_{L}* is a set-wide anomaly detection rate while operating in the standalone mode;
the set-wide false rate metric for the collaborative mode is equal to *δ*₂. (*P_{I} + N_{I}*)*,* where *δ*₂ is a weight parameter, *P_{I}* is a set-wide false positive rate for the collaborative mode, and *N_{I}* is a set-wide false negative rate for the collaborative mode; and
the false rate threshold for the collaborative mode is equal to *δ*₁. *D_{I},* where *δ*₁ is a weight parameter, and *D_{I}* is a set-wide anomaly detection rate while operating in the collaborative mode.

13. A security controller (18) for a communication network (10) in which defense agents (14) in a set are distributed for anomaly detection in the communication network (10), the security controller (18) configured to:
obtain one or more accuracy metrics (20) characterizing how accurately the defense agents (14) in the set (14S) detect anomalies in the communication network (10);
obtain one or more resource consumption metrics (22) characterizing how extensively the defense agents (14) in the set (14S) consume resources in the communication network (10); and
control the defense agents (14) in the set (14S) based on the one or more accuracy metrics (20) and the one or more resource consumption metrics (22)
wherein controlling the defense agents (14) in the set (14S) comprises, for each of one or more anomaly detection tasks, controlling which one or more of the defense agents (14) in the set (14S) are to perform the anomaly detection task and which one or more of the defense agents (14) in the set (14S), if any, are not to perform the anomaly detection task, based on the one or more accuracy metrics (20) and the one or more resource consumption metrics (22),
**characterized in that** said controlling comprises, for at least one of the one or more anomaly detection tasks:
making a decision to switch the set from an accuracy-enhancing mode in which all of the defense agents (14) in the set (14S) perform the anomaly detection task to a resource-saving mode in which at least one of the defense agents (14) in the set (14S) does not perform the anomaly detection task, based on comparison of a set-wide resource consumption metric to a set-wide resource consumption threshold for the anomaly detection task; and
based on the decision, determining which one or more of the defense agents (14) in the set (14S) are still to perform the anomaly detection task in the resource-saving mode and which one or more of the defense agents (14) in the set (14S) are not to perform the anomaly detection task in the resource-saving mode, based on agent-specific accuracy metrics for the respective defense agents (14).

14. The security controller (18) of claim 13, configured to perform the method of any of claims 2-12.

15. A computer program comprising instructions which, when executed by at least one processor of a security controller (18), causes the security controller (18) to perform the method of any of claims 1-12.

## Patentansprüche

1. Verfahren, das von einer Sicherheitssteuereinheit (18) für ein Kommunikationsnetzwerk (10) durchgeführt wird, in dem Verteidigungsagenten (14) in einer Gruppe (14S) zur Anomalieerkennung im Kommunikationsnetzwerk (10) verteilt sind, wobei das Verfahren Folgendes umfasst:
Erhalten (200) einer oder mehrerer Genauigkeitsmetriken (20), die charakterisieren, wie genau die Verteidigungsagenten (14) in der Gruppe (14S) Anomalien im Kommunikationsnetzwerk (10) erkennen;
Erhalten (210) einer oder mehrerer Ressourcenverbrauchsmetriken (22), die charakterisieren, in welchem Umfang die Verteidigungsagenten (14) in der Gruppe (14S) Ressourcen im Kommunikationsnetzwerk (10) verbrauchen; und
Steuern (220) der Verteidigungsagenten (14) in der Gruppe (14S) basierend auf der einen oder den mehreren Genauigkeitsmetriken (20) und der einen oder den mehreren Ressourcenverbrauchsmetriken (22),
wobei Steuern der Verteidigungsagenten (14) in der Gruppe (14S) umfasst, für jede einer oder mehrerer Anomalieerkennungsaufgaben zu steuern, welcher oder welche der Verteidigungsagenten (14) in der Gruppe (14S) die Anomalieerkennungsaufgabe durchführen sollen und welcher oder welche der Verteidigungsagenten (14) in der Gruppe (14S), wenn überhaupt, die Anomalieerkennungsaufgabe nicht durchführen sollen, basierend auf der einen oder den mehreren Genauigkeitsmetriken (20) und der einen oder den mehreren Ressourcenverbrauchsmetriken (22),
**dadurch gekennzeichnet, dass** das Steuern für mindestens eine der einen oder mehreren Anomalieerkennungsaufgaben Folgendes umfasst:
Treffen einer Entscheidung, die Gruppe von einem genauigkeitssteigernden Modus, in dem alle der Verteidigungsagenten (14) in der Gruppe (14S) die Anomalieerkennungsaufgabe durchführen, in einen ressourcenschonenden Modus umzuschalten, in dem mindestens einer der Verteidigungsagenten (14) in der Gruppe (14S) die Anomalieerkennungsaufgabe nicht durchführt, basierend auf einem Vergleich einer gruppenweiten Ressourcenverbrauchsmetrik mit einem gruppenweiten Ressourcenverbrauchsschwellenwert für die Anomalieerkennungsaufgabe; und
basierend auf der Entscheidung, Bestimmen welcher oder welche der Verteidigungsagenten (14) in der Gruppe (14S) die Anomalieerkennungsaufgabe weiterhin im ressourcenschonenden Modus durchführen sollen und welcher oder welche der Verteidigungsagenten (14) in der Gruppe (14S) die Anomalieerkennungsaufgabe nicht im ressourcenschonenden Modus durchführen sollen, basierend auf agentenspezifischen Genauigkeitsmetriken für die jeweiligen Verteidigungsagenten (14).

2. Verfahren nach Anspruch 1, wobei die eine oder mehreren Genauigkeitsmetriken (20) Folgendes beinhalten:
eine gruppenweite Falsch-Positiv-Rate, die eine Rate umfasst, mit der die Verteidigungsagenten (14) in der Gruppe (14S) Anomalien fälschlicherweise erkennen, eine gruppenweite Falsch-Negativ-Rate, die eine Rate umfasst, mit der die Verteidigungsagenten (14) in der Gruppe (14S) Anomalien nicht erkennen, und/oder eine gruppenweite Falsch-Positiv-Rate, die eine Kombination der gruppenweiten Falsch-Positiv-Rate und der gruppenweiten Falsch-Negativ-Rate umfasst; und/oder
für jeden der Verteidigungsagenten (14) in der Gruppe (14S) eine agentenspezifische Falsch-Positiv-Rate, die eine Rate umfasst, mit der der Verteidigungsagent fälschlicherweise Anomalien erkennt, eine agentenspezifische Falsch-Negativ-Rate, die eine Rate umfasst, mit der der Verteidigungsagent Anomalien nicht erkennt, und/oder eine agentenspezifische Falsch-Positiv-Rate, die eine Kombination der agentenspezifischen Falsch-Negativ-Rate und der agentenspezifischen Falsch-Negativ-Rate umfasst.

3. Verfahren nach einem der Ansprüche 1-2, wobei Steuern der Verteidigungsagenten (14) in der Gruppe (14S) umfasst, basierend auf der einen oder den mehreren Genauigkeitsmetriken (20) und der einen oder den mehreren Ressourcenverbrauchsmetriken (22) zu steuern, ob und/oder wie jeder Verteidigungsagent in der Gruppe (14S) jede einer oder mehrerer Anomalieerkennungsaufgaben durchführt.

4. Verfahren nach einem der Ansprüche 1-3, wobei das Steuern für mindestens eine der einen oder mehreren Anomalieerkennungsaufgaben umfasst, eine Entscheidung zu treffen, die Gruppe vom ressourcenschonenden Modus, in dem mindestens einer der Verteidigungsagenten (14) in der Gruppe (14S) die Anomalieerkennungsaufgabe nicht durchführt, in den genauigkeitssteigernden Modus umzuschalten, in dem alle Verteidigungsagenten (14) in der Gruppe (14S) die Anomalieerkennungsaufgabe durchführen, basierend auf Folgendem:
Vergleich einer gruppenweiten Genauigkeitsmetrik mit einem gruppenweiten Genauigkeitsschwellenwert für die Anomalieerkennungsaufgabe; oder
Vergleich der gruppenweiten Ressourcenverbrauchsmetrik mit dem gruppenweiten Ressourcenverbrauchsschwellenwert für die Anomalieerkennungsaufgabe.

5. Verfahren nach einem der Ansprüche 1-4, wobei das Steuern Folgendes umfasst:
Erhalten einer Verteidigungsagentennutzenmetrik für die Gruppe von Verteidigungsagenten (14) als eine Funktion der einen oder mehreren Genauigkeitsmetriken (20) und der einen oder mehreren Ressourcenverbrauchsmetriken (22);
Erhalten einer Angriffsnutzenmetrik als eine Funktion der Verteidigungsagentennutzenmetrik und einer Angriffsressourcenverbrauchsmetrik, die ein Ausmaß von Ressourcen widerspiegelt, die Angreifer benötigen, um einen kooperativen Angriff auf das Kommunikationsnetzwerk (10) auszuführen; und
Steuern, ob die Verteidigungsagenten (14) in der Gruppe (14S) eine oder mehrere Anomalieerkennungsaufgaben durchführen sollen, basierend auf einem Vergleich der Verteidigungsnutzenmetrik mit der Angriffsagentennutzenmetrik.

6. Verfahren nach Anspruch 5, wobei:
die Verteidigungsagentennutzenmetrik wird als *U_{D} = α*₁ *· M_{D} + α*₂ *· D_{D} - α*₃ *·* (*P_{D} + N_{D}*) *- α*₃ *· C_{D}* bestimmt, wobei *M_{D}* eine Rate angibt, mit der die Verteidigungsagenten (14) in der Gruppe (14S) jeweilige Merkmale von Anomalien bestimmen, *D_{D}* eine Rate angibt, mit der die Verteidigungsagenten (14) in der Gruppe (14S) Anomalien erkennen, *P_{D}* eine gruppenweite Falsch-Positiv-Rate angibt, die eine Rate umfasst, mit der die Verteidigungsagenten (14) in der Gruppe (14S) Anomalien fälschlicherweise erkennen, *N_{D}* eine gruppenweite Falsch-Negativ-Rate angibt, die eine Rate umfasst, mit der die Verteidigungsagenten (14) in der Gruppe (14S) Anomalien nicht erkennen, *C_{D}* die gruppenweite Ressourcenverbrauchsmetrik angibt, M_{D}, D_{D}, P_{D}, N_{D} und C_{D} ∈ [0,1] und *α*₁, *α*₂*, α*₃ ∈ [0,1] Gewichtungsparameter sind;
die Angriffsnutzenmetrik als *U_{A} = -*(*U_{D} + β · C_{A}*) bestimmt ist, wobei *C_{A}* die Angriffsressourcenverbrauchsmetrik angibt, *β* einen Gewichtungsparameter angibt und β ∈ [0,1].

7. Verfahren nach Anspruch 6, wobei das Steuern Folgendes umfasst:
für eine Merkmalsüberwachungsaufgabe, die Bestimmen jeweiliger Merkmale von Anomalien einbezieht, die erkannt werden sollen:
falls *α*₃ *· C_{D} > α*₁ *· M_{D},* wird die Gruppe von einem genauigkeitssteigernden Modus, in dem alle der Verteidigungsagenten (14) in der Gruppe (14S) die Merkmalsüberwachungsaufgabe durchführen, in einen ressourcenschonenden Modus umgeschaltet, in dem mindestens einer der Verteidigungsagenten (14) in der Gruppe (14S) die Merkmalsüberwachungsaufgabe nicht durchführt; oder
falls *α*₃ *·* (*P_{D} + N_{D}*) *> α*₁ *· M_{D},* wird die Gruppe vom ressourcenschonenden Modus, in dem mindestens einer der Verteidigungsagenten (14) in der Gruppe (14S) die Merkmalsüberwachungsaufgabe nicht durchführt, in den genauigkeitssteigernden Modus umgsechaltet, in dem alle der Verteidigungsagenten (14) in der Gruppe (14S) die Merkmalsüberwachungsaufgabe durchführen;
für eine Merkmalserkennungsaufgabe, die einbezieht, die bestimmten Merkmale zu erkennen:
falls *α*₃ *· C_{D} > α*₂ *· D_{D},* wird die Gruppe von einem genauigkeitssteigernden Modus, in dem alle der Verteidigungsagenten (14) in der Gruppe (14S) die Merkmalserkennungsaufgabe durchführen, in einen ressourcenschonenden Modus umgeschaltet, in dem mindestens einer der Verteidigungsagenten (14) in der Gruppe (14S) die Merkmalserkennungsaufgabe nicht durchführt; oder
falls *α*₃ *·* (*P_{D} + N_{D}*) *> α*₂ *· D_{D},* wird die Gruppe vom ressourcenschonenden Modus, in dem mindestens einer der Verteidigungsagenten (14) in der Gruppe (14S) die Merkmalserkennungsaufgabe nicht durchführt, in den genauigkeitssteigernden Modus umgsechaltet, in dem alle der Verteidigungsagenten (14) in der Gruppe (14S) die Merkmalserkennungsaufgabe durchführen;
für eine Entscheidungsfindungsaufgabe, die einbezieht, Entscheidungen zu treffen, ob Anomalien vorliegen oder nicht, basierend auf erkannten Merkmalen:
falls *α*₃ *·* (*P_{D} + N_{D}*) ≤ *α*₁ *· M_{D} + α*₂ *· D_{D},* wird die Gruppe von einem genauigkeitssteigernden Modus, in dem alle der Verteidigungsagenten (14) in der Gruppe (14S) die Merkmalsentscheidungsfindungsaufgabe durchführen, in einen ressourcenschonenden Modus umgeschaltet, in dem mindestens einer der Verteidigungsagenten (14) in der Gruppe (14S) die Merkmalsentscheidungsfindungsaufgabe nicht durchführt; oder
falls *α*₃ *·* (*P_{D} + N_{D}*) *> α*₁ *· M_{D} + α*₂ *· D_{D},* wird die Gruppe vom ressourcenschonenden Modus, in dem mindestens einer der Verteidigungsagenten (14) in der Gruppe (14S) die Merkmalsentscheidungsfindungsaufgabe nicht durchführt, in den genauigkeitssteigernden Modus umgsechaltet, in dem alle der Verteidigungsagenten (14) in der Gruppe (14S) die Merkmalsentscheidungsfindungsaufgabe durchführen.

8. Verfahren nach einem der Ansprüche 1-7, wobei Steuern der Verteidigungsagenten (14) in der Gruppe (14S) basierend auf der einen oder den mehreren Genauigkeitsmetriken (20) und der einen oder den mehreren Ressourcenverbrauchsmetriken (22) Steuern umfasst, ob und welche Verteidigungsagenten (14) in der Gruppe (14S) in einem kollaborativen Modus arbeiten, um gemeinsam eine Anomalieerkennung durchzuführen, und Steuern, ob und welche Verteidigungsagenten (14) in der Gruppe (14S) in einem eigenständigen Modus arbeiten, um eine Anomalieerkennung durchzuführen, ohne zusammenzuarbeiten.

9. Verfahren nach Anspruch 8, wobei die eine oder mehreren Genauigkeitsmetriken (20) jeweils für den kollaborativen Modus und den eigenständigen Modus erhalten werden, wobei das Steuern Folgendes umfasst:
Steuern der Verteidigungsagenten (14) in der Gruppe (14S), in dem kollaborativen Modus zu arbeiten, wenn jedes von einem oder mehreren Auslösekriterien für den kollaborativen Modus erfüllt ist, wobei das eine oder die mehreren Auslösekriterien für den kollaborativen Modus beinhalten, dass eine gruppenweite Genauigkeitsmetrik für den eigenständigen Modus einen Genauigkeitsschwellenwert für den eigenständigen Modus überschreitet, wobei die gruppen- (14S) - weite Genauigkeitsmetrik eine gruppenweite Falschratenmetrik ist; und
Steuern der Verteidigungsagenten (14) in der Gruppe (14S), in dem eigenständigen Modus zu arbeiten, wenn jedes von einem oder mehreren Auslösekriterien für den eigenständigen Modus erfüllt ist, wobei das eine oder die mehreren Auslösekriterien für den eigenständigen Modus beinhalten, dass eine gruppenweite Genauigkeitsmetrik für den kollaborativen Modus einen Genauigkeitsschwellenwert für den kollaborativen Modus überschreitet, wobei die gruppen- (14S) - weite Genauigkeitsmetrik eine gruppenweite Falschratenmetrik ist.

10. Verfahren nach Anspruch 9, wobei der Genauigkeitsschwellenwert für den eigenständigen Modus eine Funktion einer gruppenweiten Anomalieerkennungsrate der Verteidigungsagenten (14) in der Gruppe (14S), während diese im eigenständigen Modus arbeiten, ist und/oder wobei der Genauigkeitsschwellenwert für den kollaborativen Modus eine Funktion einer gruppenweiten Anomalieerkennungsrate der Verteidigungsagenten (14) in der Gruppe (14S) ist, während diese im kollaborativen Modus arbeiten.

11. Verfahren nach einem der Ansprüche 9-10, wobei die eine oder mehrere Ressourcenverbrauchsmetriken (22) für jeden des kollaborativen Modus und des eigenständigen Modus erhalten werden und wobei das eine oder die mehreren Auslösekriterien ferner beinhalten, dass eine für den kollaborativen Modus erhaltene, gruppenweite Ressourcenverbrauchsmetrik einen Ressourcenverbrauchsschwellenwert für den kollaborativen Modus überschreiten.

12. Verfahren nach einem der Ansprüche 9-11, wobei:
die gruppenweite Falsch-Positiv-Rate für den eigenständigen Modus gleich *γ*₂ · (*P_{L}* + *N_{L}*) ist, wobei *γ*₂ ein Gewichtungsparameter ist, *P_{L}* eine gruppenweite Falsch-Positiv-Rate für den eigenständigen Modus ist und *N_{L}* eine gruppenweite Falsch-Negativ-Rate für den eigenständigen Modus ist;
der Falschratenschwellenwert für den eigenständigen Modus gleich *γ*₁ · *D_{L}* ist, wobei *γ*₁ ein Gewichtungsparameter ist und *D_{L}* eine gruppenweite Anomalieerkennungsrate ist, während diese im eigenständigen Modus arbeitet;
die gruppenweite Falsch-Positiv-Rate für den kollaborativen Modus gleich *δ*₂ · (*P_{I}* + *N_{I}*) ist, wobei *δ*₂ ein Gewichtungsparameter ist, *P_{I}* eine gruppenweite Falsch-Positiv-Rate für den kollaborativen Modus ist und *N_{I}* eine gruppenweite Falsch-Negativ-Rate für den kollaborativen Modus ist; und
der Falschratenschwellenwert für den kollaborativen Modus gleich *δ*₁ · *D_{I}* ist, wobei *δ*₂ ein Gewichtungsparameter ist und *D_{I}* eine gruppenweite Anomalieerkennungsrate ist, während diese im kollaborativen Modus arbeitet.

13. Sicherheitssteuereinheit (18) für ein Kommunikationsnetzwerk (10), in dem Verteidigungsagenten (14) in einer Gruppe zur Anomalieerkennung im Kommunikationsnetzwerk (10) verteilt sind, wobei die Sicherheitssteuereinheit (18) für Folgendes konfiguriert ist:
Erhalten einer oder mehrerer Genauigkeitsmetriken (20), die charakterisieren, wie genau die Verteidigungsagenten (14) in der Gruppe (14S) Anomalien im Kommunikationsnetzwerk (10) erkennen;
Erhalten einer oder mehrerer Ressourcenverbrauchsmetriken (22), die charakterisieren, in welchem Umfang die Verteidigungsagenten (14) in der Gruppe (14S) Ressourcen im Kommunikationsnetzwerk (10) verbrauchen; und
Steuern der Verteidigungsagenten (14) in der Gruppe (14S) basierend auf der einen oder den mehreren Genauigkeitsmetriken (20) und der einen oder den mehreren Ressourcenverbrauchsmetriken (22),
wobei Steuern der Verteidigungsagenten (14) in der Gruppe (14S) umfasst, für jede einer oder mehrerer Anomalieerkennungsaufgaben zu steuern, welcher oder welche der Verteidigungsagenten (14) in der Gruppe (14S) die Anomalieerkennungsaufgabe durchführen sollen und welcher oder welche der Verteidigungsagenten (14) in der Gruppe (14S), wenn überhaupt, die Anomalieerkennungsaufgabe nicht durchführen sollen, basierend auf der einen oder den mehreren Genauigkeitsmetriken (20) und der einen oder den mehreren Ressourcenverbrauchsmetriken (22),
**dadurch gekennzeichnet, dass** das Steuern für mindestens eine der einen oder mehreren Anomalieerkennungsaufgaben Folgendes umfasst:
Treffen einer Entscheidung, die Gruppe von einem genauigkeitssteigernden Modus, in dem alle der Verteidigungsagenten (14) in der Gruppe (14S) die Anomalieerkennungsaufgabe durchführen, in einen ressourcenschonenden Modus umzuschalten, in dem mindestens einer der Verteidigungsagenten (14) in der Gruppe (14S) die Anomalieerkennungsaufgabe nicht durchführt, basierend auf einem Vergleich einer gruppenweiten Ressourcenverbrauchsmetrik mit einem gruppenweiten Ressourcenverbrauchsschwellenwert für die Anomalieerkennungsaufgabe; und
basierend auf der Entscheidung, Bestimmen welcher oder welche der Verteidigungsagenten (14) in der Gruppe (14S) die Anomalieerkennungsaufgabe weiterhin im ressourcenschonenden Modus durchführen sollen und welcher oder welche der Verteidigungsagenten (14) in der Gruppe (14S) die Anomalieerkennungsaufgabe nicht im ressourcenschonenden Modus durchführen sollen, basierend auf agentenspezifischen Genauigkeitsmetriken für die jeweiligen Verteidigungsagenten (14).

14. Sicherheitssteuereinheit (18) nach Anspruch 13, die so konfiguriert ist, dass sie das Verfahren nach einem der Ansprüche 2-12 durchführt.

15. Computerprogramm, das Anweisungen umfasst, die, wenn sie von mindestens einem Prozessor einer Sicherheitssteuereinheit (18) ausgeführt werden, die Sicherheitssteuereinheit (18) veranlassen, das Verfahren nach einem der Ansprüche 1-12 durchzuführen.

## Revendications

1. Procédé mis en œuvre par un dispositif de commande de sécurité (18) pour un réseau de communication (10) dans lequel des agents de défense (14) d'un ensemble (14S) sont répartis pour la détection d'anomalies dans le réseau de communication (10), le procédé comprenant :
l'obtention (200) d'une ou plusieurs métriques de précision (20) caractérisant la précision avec laquelle les agents de défense (14) de l'ensemble (14S) détectent les anomalies dans le réseau de communication (10) ;
l'obtention (210) d'une ou plusieurs métriques de consommation de ressources (22) caractérisant la manière dont les agents de défense (14) de l'ensemble (14S) consomment les ressources du réseau de communication (10) ; et
la commande (220) des agents de défense (14) de l'ensemble (14S) sur la base des une ou plusieurs métriques de précision (20) et des une ou plusieurs métriques de consommation de ressources (22),
dans lequel la commande des agents de défense (14) de l'ensemble (14S) comprend, pour chacune d'une ou plusieurs tâches de détection d'anomalies, la commande des un ou plusieurs agents de défense (14) de l'ensemble (14S) qui doivent effectuer la tâche de détection d'anomalies et des un ou plusieurs agents de défense (14) de l'ensemble (14S), le cas échéant, qui ne doivent pas effectuer la tâche de détection d'anomalies, sur la base des une ou plusieurs métriques de précision (20) et des une ou plusieurs métriques de consommation de ressources (22),
**caractérisé en ce que** ladite commande comprend, pour au moins l'une des une ou plusieurs tâches de détection d'anomalies :
la prise de décision de faire passer l'ensemble d'un mode d'amélioration de précision dans lequel tous les agents de défense (14) de l'ensemble (14S) effectuent la tâche de détection d'anomalies à un mode d'économie de ressources dans lequel au moins l'un des agents de défense (14) de l'ensemble (14S) n'effectue pas la tâche de détection d'anomalies, sur la base de la comparaison entre une métrique de consommation de ressources à l'échelle de l'ensemble et un seuil de consommation de ressources à l'échelle de l'ensemble pour la tâche de détection d'anomalies ; et
sur la base de la décision, la détermination des un ou plusieurs agents de défense (14) de l'ensemble (14S) qui doivent encore effectuer la tâche de détection d'anomalies en mode d'économie de ressources et des un ou plusieurs agents de défense (14) de l'ensemble (14S) qui ne doivent pas effectuer la tâche de détection d'anomalies en mode d'économie de ressources, sur la base de métriques de précision spécifiques à l'agent pour les agents de défense respectifs (14).

2. Procédé selon la revendication 1, dans lequel les une ou plusieurs métriques de précision (20) incluent :
un taux de faux positifs à l'échelle de l'ensemble comprenant un taux auquel les agents de défense (14) de l'ensemble (14S) détectent incorrectement les anomalies, un taux de faux négatifs à l'échelle de l'ensemble comprenant un taux auquel les agents de défense (14) de l'ensemble (14S) ne parviennent pas à détecter les anomalies, et/ou un taux de faux positifs à l'échelle de l'ensemble comprenant une combinaison du taux de faux positifs à l'échelle de l'ensemble et du taux de faux négatifs à l'échelle de l'ensemble ; et/ou
pour chacun des agents de défense (14) de l'ensemble (14S), un taux de faux positifs spécifique à l'agent comprenant un taux auquel l'agent de défense détecte incorrectement des anomalies, un taux de faux négatifs spécifique à l'agent comprenant un taux auquel l'agent de défense ne parvient pas à détecter des anomalies, et/ou un taux de faux positifs spécifique à l'agent comprenant une combinaison du taux de faux positifs spécifique à l'agent et du taux de faux négatifs spécifique à l'agent.

3. Procédé selon l'une quelconque des revendications 1-2, dans lequel la commande des agents de défense (14) de l'ensemble (14S) comprend, sur la base des une ou plusieurs métriques de précision (20) et des une ou plusieurs métriques de consommation de ressources (22), la commande du fait que chaque agent de défense de l'ensemble (14S) effectue ou non chacune d'une ou plusieurs tâches de détection d'anomalies et/ou de la manière dont celui-ci les effectue.

4. Procédé selon l'une quelconque des revendications 1-3, dans lequel ladite commande comprend, pour au moins l'une des une ou plusieurs tâches de détection d'anomalies, la prise de décision de faire passer l'ensemble du mode d'économie de ressources dans lequel au moins l'un des agents de défense (14) de l'ensemble (14S) n'effectue pas la tâche de détection d'anomalies au mode d'amélioration de précision dans lequel tous les agents de défense (14) de l'ensemble (14S) effectuent la tâche de détection d'anomalies, sur la base de :
la comparaison entre une métrique de précision à l'échelle de l'ensemble et un seuil de précision à l'échelle de l'ensemble pour la tâche de détection d'anomalies ; ou
la comparaison entre la métrique de consommation de ressources à l'échelle de l'ensemble et le seuil de consommation de ressources à l'échelle de l'ensemble pour la tâche de détection d'anomalies.

5. Procédé selon l'une quelconque des revendications 1-4, dans lequel ladite commande comprend :
l'obtention d'une métrique d'utilité d'agent de défense pour l'ensemble d'agents de défense (14) en fonction des une ou plusieurs métriques de précision (20) et des une ou plusieurs métriques de consommation de ressources (22) ;
l'obtention d'une métrique d'utilité d'attaque en fonction de la métrique d'utilité d'agent de défense et d'une métrique de consommation de ressources d'attaque reflétant l'étendue des ressources nécessaires aux attaquants pour exécuter une attaque coopérative sur le réseau de communication (10) ; et
la commande du fait que les agents de défense (14) de l'ensemble (14S) doivent ou non effectuer une ou plusieurs tâches de détection d'anomalies, sur la base d'une comparaison entre la métrique d'utilité d'agent de défense et la métrique d'utilité d'attaque.

6. Procédé selon la revendication 5, dans lequel :
la métrique d'utilité d'agent de défense est déterminée comme *U_{D} = α*₁ *· M_{D} + α*₂ *· D_{D} - α*₃ *·* (*P_{D} + N_{D}*) *- α*₃ *· C_{D},* où *M_{D}* représente un taux auquel les agents de défense (14) de l'ensemble (14S) déterminent des caractéristiques respectives des anomalies, *D_{D}* représente un taux auquel les agents de défense (14) de l'ensemble (14S) détectent des anomalies, *P_{D}* représente un taux de faux positifs à l'échelle de l'ensemble comprenant un taux auquel les agents de défense (14) de l'ensemble (14S) détectent incorrectement des anomalies, *N_{D}* représente un taux de faux négatifs à l'échelle de l'ensemble comprenant un taux auquel les agents de défense (14) de l'ensemble (14S) ne parviennent pas à détecter des anomalies, *C_{D}* représente la métrique de consommation de ressources à l'échelle de l'ensemble, M_{D}*,* D_{D}, P_{D}, N_{D} et C_{D} E [0,1], et *α*₁, *α*₂*, α*₃ ∈ [0,1] représentent des paramètres de pondération ;
la métrique d'utilité d'attaque est déterminée comme *U_{A} =* -(*U_{D} + β · C_{A}*), où *C_{A}* est la métrique de consommation de ressources d'attaque, *β* est un paramètre de pondération, et *β* ∈ [0,1].

7. Procédé selon la revendication 6, dans lequel ladite commande comprend :
pour une tâche de surveillance des caractéristiques impliquant la détermination de caractéristiques respectives des anomalies à détecter :
si *α*₃ *· C_{D} > α*₁ *· M_{D},* le passage de l'ensemble d'un mode d'amélioration de précision dans lequel tous les agents de défense (14) de l'ensemble (14S) effectuent la tâche de surveillance des caractéristiques à un mode d'économie de ressources dans lequel au moins l'un des agents de défense (14) de l'ensemble (14S) n'effectue pas la tâche de surveillance des caractéristiques ; ou
si *α*₃ *·* (*P_{D} + N_{D}*) *> α*₁ · *M_{D},* le passage de l'ensemble du mode d'économie de ressources dans lequel au moins l'un des agents de défense (14) de l'ensemble (14S) n'effectue pas la tâche de surveillance des caractéristiques au mode d'amélioration de précision dans lequel tous les agents de défense (14) de l'ensemble (14S) effectuent la tâche de surveillance des caractéristiques ;
pour une tâche de détection de caractéristiques impliquant la détection des caractéristiques déterminées :
si *α*₃ · *C_{D}* > *α*₂ · *D_{D}*, le passage de l'ensemble d'un mode d'amélioration de précision dans lequel tous les agents de défense (14) de l'ensemble (14S) effectuent la tâche de détection de caractéristiques à un mode d'économie de ressources dans lequel au moins l'un des agents de défense (14) de l'ensemble (14S) n'effectue pas la tâche de détection de caractéristiques ; ou
si *α*₃ · (*P_{D}* + *N_{D}*) > *α*₂ · *D_{D}*, le passage de l'ensemble du mode d'économie de ressources dans lequel au moins l'un des agents de défense (14) de l'ensemble (14S) n'effectue pas la tâche de détection de caractéristiques au mode d'amélioration de précision dans lequel tous les agents de défense (14) de l'ensemble (14S) effectuent la tâche de détection de caractéristiques ;
pour une tâche de prise de décision impliquant la prise de décisions quant à la présence ou non d'anomalies sur la base des caractéristiques détectées :
si *α*₃ · (*P_{D}* + *N_{D}*) ≤ *α*₁ · *M_{D}* + *α*₂ · *D_{D}*, le passage de l'ensemble d'un mode d'amélioration de précision dans lequel tous les agents de défense (14) de l'ensemble (14S) effectuent la tâche de prise de décision à un mode d'économie de ressources dans lequel au moins l'un des agents de défense (14) de l'ensemble (14S) n'effectue pas la tâche de prise de décision ; ou
si *α*₃ · (*P_{D}* + *N_{D}*) > *α*₁ · *M_{D}* + *α*₂ · *D_{D}*, le passage de l'ensemble du mode d'économie de ressources dans lequel au moins l'un des agents de défense (14) de l'ensemble (14S) n'effectue pas la tâche de prise de décision au mode d'amélioration de précision dans lequel tous les agents de défense (14) de l'ensemble (14S) effectuent la tâche de prise de décision.

8. Procédé selon l'une quelconque des revendications 1-7, dans lequel la commande des agents de défense (14) de l'ensemble (14S) comprend, sur la base des une ou plusieurs métriques de précision (20) et des une ou plusieurs métriques de consommation de ressources (22), la commande du fait que les agents de défense (14) de l'ensemble (14S) fonctionnent ou non en mode collaboratif pour effectuer une détection d'anomalies en collaboration les uns avec les autres, ou la commande des agents de défense (14) de l'ensemble (14S) qui fonctionnent en mode collaboratif pour effectuer une détection d'anomalies en collaboration les uns avec les autres, et la commande du fait que les agents de défense (14) de l'ensemble (14S) fonctionnent ou non en mode autonome pour effectuer une détection d'anomalies sans collaborer les uns avec les autres, ou la commande des agents de défense (14) de l'ensemble (14S) qui fonctionnent en mode autonome pour effectuer une détection d'anomalies sans collaborer les uns avec les autres.

9. Procédé selon la revendication 8, dans lequel les une ou plusieurs métriques de précision (20) sont obtenues pour chacun du mode collaboratif et du mode autonome, dans lequel ladite commande comprend :
la commande d'agents de défense (14) de l'ensemble (14S) pour qu'ils fonctionnent en mode collaboratif si chacun d'un ou plusieurs critères de déclenchement de mode collaboratif est rempli, dans lequel les un ou plusieurs critères de déclenchement de mode collaboratif incluent une métrique de précision à l'échelle de l'ensemble pour le mode autonome dépassant un seuil de précision pour le mode autonome, dans lequel la métrique de précision à l'échelle de l'ensemble (14S) est une métrique de taux de faux à l'échelle de l'ensemble ; et
la commande d'agents de défense (14) de l'ensemble (14S) pour qu'ils fonctionnent en mode autonome si chacun d'un ou plusieurs critères de déclenchement de mode autonome est rempli, dans lequel les un ou plusieurs critères de déclenchement de mode autonome incluent une métrique de précision à l'échelle de l'ensemble pour le mode collaboratif tombant en dessous d'un seuil de précision pour le mode collaboratif, dans lequel la métrique de précision à l'échelle de l'ensemble (14S) est une métrique de taux de faux à l'échelle de l'ensemble.

10. Procédé selon la revendication 9, dans lequel le seuil de précision pour le mode autonome est une fonction d'un taux de détection d'anomalies à l'échelle de l'ensemble des agents de défense (14) de l'ensemble (14S) lors du fonctionnement en mode autonome, et/ou dans lequel le seuil de précision pour le mode collaboratif est une fonction d'un taux de détection d'anomalies à l'échelle de l'ensemble des agents de défense (14) de l'ensemble (14S) lors du fonctionnement en mode collaboratif.

11. Procédé selon l'une quelconque des revendications 9-10, dans lequel les une ou plusieurs métriques de consommation de ressources (22) sont obtenues pour chacun du mode collaboratif et du mode autonome, et dans lequel les un ou plusieurs critères de déclenchement de mode autonome incluent en outre une métrique de consommation de ressources à l'échelle de l'ensemble obtenue pour le mode collaboratif dépassant un seuil de consommation de ressources pour le mode collaboratif.

12. Procédé selon l'une quelconque des revendications 9-11, dans lequel :
la métrique de taux de faux à l'échelle de l'ensemble pour le mode autonome est égale à *γ*₂ · (*P_{L}* + *N_{L}*), où *γ*₂ est un paramètre de pondération, *P_{L}* est un taux de faux positifs à l'échelle de l'ensemble pour le mode autonome, et *N_{L}* est un taux de faux négatifs à l'échelle de l'ensemble pour le mode autonome ;
le seuil de taux de faux pour le mode autonome est égal à *γ*₁ · *D_{L}*, où *γ*₁ est un paramètre de pondération, et *D_{L}* est un taux de détection d'anomalies à l'échelle de l'ensemble lors du fonctionnement en mode autonome ;
la métrique de taux de faux à l'échelle de l'ensemble pour le mode collaboratif est égale à *δ*₂ · (*P_{I}* + *N_{I}*), où *δ*₂ est un paramètre de pondération, *P_{I}* est un taux de faux positifs à l'échelle de l'ensemble pour le mode collaboratif, et *N_{I}* est un taux de faux négatifs à l'échelle de l'ensemble pour le mode collaboratif ; et
le seuil de taux de faux pour le mode collaboratif est égal à *δ*₁ · *D_{I}*, où *δ*₂ est un paramètre de pondération, et *D_{I}* est un taux de détection d'anomalies à l'échelle de l'ensemble lors du fonctionnement en mode collaboratif.

13. Dispositif de commande de sécurité (18) pour un réseau de communication (10) dans lequel des agents de défense (14) d'un ensemble sont répartis pour la détection d'anomalies dans le réseau de communication (10), le dispositif de commande de sécurité (18) étant configuré pour :
obtenir une ou plusieurs métriques de précision (20) caractérisant la précision avec laquelle les agents de défense (14) de l'ensemble (14S) détectent les anomalies dans le réseau de communication (10) ;
obtenir une ou plusieurs métriques de consommation de ressources (22) caractérisant la manière dont les agents de défense (14) de l'ensemble (14S) consomment les ressources du réseau de communication (10) ; et
commander les agents de défense (14) de l'ensemble (14S) sur la base des une ou plusieurs métriques de précision (20) et des une ou plusieurs métriques de consommation de ressources (22),
dans lequel la commande des agents de défense (14) de l'ensemble (14S) comprend, pour chacune d'une ou plusieurs tâches de détection d'anomalies, la commande des un ou plusieurs agents de défense (14) de l'ensemble (14S) qui doivent effectuer la tâche de détection d'anomalies et des un ou plusieurs agents de défense (14) de l'ensemble (14S), le cas échéant, qui ne doivent pas effectuer la tâche de détection d'anomalies, sur la base des une ou plusieurs métriques de précision (20) et des une ou plusieurs métriques de consommation de ressources (22),
**caractérisé en ce que** ladite commande comprend, pour au moins l'une des une ou plusieurs tâches de détection d'anomalies :
la prise de décision de faire passer l'ensemble d'un mode d'amélioration de précision dans lequel tous les agents de défense (14) de l'ensemble (14S) effectuent la tâche de détection d'anomalies à un mode d'économie de ressources dans lequel au moins l'un des agents de défense (14) de l'ensemble (14S) n'effectue pas la tâche de détection d'anomalies, sur la base de la comparaison entre une métrique de consommation de ressources à l'échelle de l'ensemble et un seuil de consommation de ressources à l'échelle de l'ensemble pour la tâche de détection d'anomalies ; et
sur la base de la décision, la détermination des un ou plusieurs agents de défense (14) de l'ensemble (14S) qui doivent encore effectuer la tâche de détection d'anomalies en mode d'économie de ressources et des un ou plusieurs agents de défense (14) de l'ensemble (14S) qui ne doivent pas effectuer la tâche de détection d'anomalies en mode d'économie de ressources, sur la base de métriques de précision spécifiques à l'agent pour les agents de défense respectifs (14).

14. Dispositif de commande de sécurité (18) selon la revendication 13, configuré pour effectuer le procédé selon l'une quelconque des revendications 2-12.

15. Programme informatique comprenant des instructions qui, lorsqu'elles sont exécutées par au moins un processeur d'un dispositif de commande de sécurité (18), amènent le dispositif de commande de sécurité (18) à effectuer le procédé selon l'une quelconque des revendications 1-12.
